# EUROPEAN PATENT APPLICATION

(11) **EP 4 783 496 A1**
(43) Date of publication of application: **29.07.2026**
(21) Application number: 24884403.7
(22) Date of filing: 12.10.2024
(51) Int. Cl.: H04L 1/00

(54) **DATA TRANSMISSION METHOD AND APPARATUS, TERMINAL, NETWORK DEVICE, AND STORAGE MEDIUM**

(30) Priority: 01.11.2023 CN 202311446633
(71) Applicant: Datang Mobile Communications Equipment Co., Ltd., Beijing 100085 (CN)
(72) Inventor: BAI, Wei, Beijing 100085 (CN)
(74) Representative: Ipsilon
(86) International application number: PCT/CN2024/124490
(87) International publication number: WO 2025/092399

(57) **Abstract**

In embodiments provided by the present disclosure, a data modulation symbol and a demodulation reference signal (DMRS) are sent on the basis of physical resource positions of the data modulation symbol and of the DMRS on a physical resource, wherein the physical resource position of the data modulation symbol on the physical resource is determined by means of the following steps: mapping the data modulation symbol to the physical resource, and dividing the mapped data modulation symbol into one or more groups, each group comprising at least one data modulation symbol; and for any group, determining the physical resource position of the data modulation symbol in the group on the basis of a reference resource position of the group, the reference resource position having an association relationship with the physical resource position of the DMRS.

## Description

The present application claims priority to Chinese Patent Application No. 2023114466330, entitled "DATA TRANSMISSION METHOD AND APPARATUS, TERMINAL, NETWORK DEVICE, AND STORAGE MEDIUM", filed on November 1, 2023, the entire contents of which are incorporated herein by reference.

### TECHNICAL FIELD

The present disclosure relates to the technical field of communications, and in particular, to a data transmission method, a data transmission apparatus, a terminal, a network device, a storage medium, and a computer program product.

### BACKGROUND

With the development and change of mobile communication, many international organizations begin to research new wireless communication systems, and the increase in the number of connected devices is one of important driving forces for the new wireless communication systems. However, due to limited data transmission resources of a network, initial access and data transmission of a huge number of terminals cannot be accommodated by adopting a common contention access technology. Uncoordinated random access and NOMA transmission (URAT) can support a huge number of terminals because it does not require or only requires quite limited coordinate resources between the network and the terminals.

In the URAT, in order to obtain diversity gain, data modulation symbols of the terminal may be dispersed on physical resources configured across the entire network, and in order to demodulate the data modulation symbols, a Demodulation Reference Signal (DMRS) needs to be uniformly inserted into the physical resources. However, when the data modulation symbols are sparse, the sparse data modulation symbols and the uniformly distributed DMRS cause quite large DMRS overhead. Therefore, how to realize correct transmission of the data modulation symbols with low DMRS overhead is a technical problem required to be solved at present.

### SUMMARY

Various embodiments of the present disclosure provide a data transmission method, a data transmission apparatus, a terminal, a network device, a storage medium, and a computer program product.

In a first aspect, the present disclosure provides a data transmission method applied to a terminal, the method including:

sending data modulation symbols and a demodulation reference signal (DMRS) based on physical resource positions of the data modulation symbols and a physical resource position of the DMRS on physical resources;
where the physical resource positions of the data modulation symbols on the physical resources are determined by means of:
mapping the data modulation symbols onto the physical resources, and classifying the mapped data modulation symbols into one or more groups, each group including at least one data modulation symbol; and
for any group, determining the physical resource position of each data modulation symbol in the group based on a reference resource position of the group, the reference resource position having an association with the physical resource position of the DMRS.

In an embodiment, the association between the reference resource position and the physical resource position of the DMRS includes one or more of: the reference resource position being identical to the physical resource position of the DMRS; and
a spacing between the physical resource position of the DMRS and the reference resource position being smaller than a preset spacing.

In an embodiment, the reference resource position includes one or more of: the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing.

In an embodiment, classifying the mapped data modulation symbols into the one or more groups includes: skipping a data modulation symbol at a first target resource position, and grouping the data modulation symbols, where the first target resource position is determined as follows:
determining the first target resource position based on a physical resource position for sending a preamble signal; or determining the first target resource position based on a second frequency domain spacing, a second time domain spacing, and the physical resource position for sending the preamble signal.

In an embodiment, the method further includes:
determining a reserved physical resource position of the DMRS in the group based on the reference resource position of the group and the preset spacing; and inserting the DMRS onto the reserved physical resource position in the group.

In an embodiment, the method further includes:
mapping the DMRS onto the physical resources; and taking the physical resource position of the DMRS as the reference resource position of the group corresponding to the DMRS.

In an embodiment, the method further includes:
for any group, maintaining the physical resource position of a data modulation symbol at the reference resource position in the group unchanged, and moving other data modulation symbols in the group to the physical resource positions of the data modulation symbols; or maintaining the physical resource position of the DMRS at the reference resource position in the group unchanged, and moving other data modulation symbols in the group to the physical resource positions of the data modulation symbols.

In a second aspect, the present disclosure provides a data transmission method applied to a network device, the method including:
receiving data modulation symbols and a demodulation reference signal (DMRS) sent by a terminal;
determining a data modulation symbol in each group according to a reference resource position of the group, where a physical resource position of the DMRS corresponding to the group has an association with the reference resource position; and
performing channel estimation on the data modulation symbol in each group based on the DMRS corresponding to the group to obtain a DMRS channel estimation result.

In an embodiment, the association between the physical resource position of the DMRS and the reference resource position includes one or more of: the reference resource position being identical to the physical resource position of the DMRS; and
a spacing between the physical resource position of the DMRS and the reference resource position being smaller than a preset spacing.

In an embodiment, the reference resource position includes one or more of: the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing.

In a third aspect, the present disclosure provides a data transmission apparatus, the apparatus including:
a sending unit, configured to send data modulation symbols and a demodulation reference signal (DMRS) based on physical resource positions of the data modulation symbols and a physical resource position of the DMRS on physical resources;
where the physical resource positions of the data modulation symbols on the physical resources are determined by a processing unit, and the processing unit is configured to: map the data modulation symbols onto the physical resources, and classify the mapped data modulation symbols into one or more groups, each group including at least one data modulation symbol; and for any group, determine the physical resource position of each data modulation symbol in the group based on a reference resource position of the group, the reference resource position having an association with the physical resource position of the DMRS.

In an embodiment, the association relationships between the reference resource position and the physical resource position of the DMRS includes one or more of:
the reference resource position being identical to the physical resource position of the DMRS; and
a spacing between the physical resource position of the DMRS and the reference resource position being smaller than a preset spacing.

In an embodiment, the reference resource position includes one or more of:
the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing.

In an embodiment, the processing unit is specifically configured to:
skip a data modulation symbol at a first target resource position, and group the data modulation symbols, where the first target resource position is determined as follows:
determining the first target resource position based on a physical resource position for sending a preamble signal; or determining the first target resource position based on a second frequency domain spacing, a second time domain spacing, and the physical resource position for sending the preamble signal.

In an embodiment, the apparatus further includes:
a first determining unit, configured to determine a reserved physical resource position of the DMRS in the group based on the reference resource position of the group and the preset spacing; and
an inserting unit, configured to insert the DMRS onto the reserved physical resource position in the group.

In an embodiment, the apparatus further includes:
a mapping unit, configured to map the DMRS onto the physical resources; and
a second determining unit, configured to take the physical resource position of the DMRS as the reference resource position of the group corresponding to the DMRS.

In an embodiment, the apparatus further includes:
a moving unit, which is configured to, for any group, maintain the physical resource position of a data modulation symbol at the reference resource position in the group unchanged, and move other data modulation symbols in the group to the physical resource positions of the data modulation symbols; or maintain the physical resource position of the DMRS at the reference resource position in the group unchanged, and move other data modulation symbols in the group to the physical resource positions of the data modulation symbols.

In a fourth aspect, the present disclosure provides a data transmission apparatus, the apparatus including:
a receiving unit, configured to receive data modulation symbols and a demodulation reference signal (DMRS) sent by a terminal;
a determining unit, configured to determine a data modulation symbol in each group according to a reference resource position of the group, where a physical resource position of the DMRS corresponding to the group has an association with the reference resource position; and
a processing unit, configured to perform channel estimation on the data modulation symbol in each group based on the DMRS corresponding to the group to obtain a DMRS channel estimation result.

In an embodiment, the association between the physical resource position of the DMRS and the reference resource position includes one or more of:
the reference resource position being identical to the physical resource position of the DMRS; and a spacing between the physical resource position of the DMRS and the reference resource position being smaller than a preset spacing.

In an embodiment, the reference resource position includes one or more of:
the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing.

In a fifth aspect, the present disclosure provides a terminal, including a memory, a transceiver and a processor:
the memory is configured to store a computer program; the transceiver is configured to transceive data under control of the processor; and the processor is configured to read the computer program in the memory and perform:
sending data modulation symbols and a demodulation reference signal (DMRS) based on physical resource positions of the data modulation symbols and a physical resource position of the DMRS on physical resources;
where the physical resource positions of the data modulation symbols on the physical resources are determined by means of:
   mapping the data modulation symbols onto the physical resources, and classifying the mapped data modulation symbols into one or more groups, each group incluing at least one data modulation symbol; and
   for any group, determining the physical resource position of each data modulation symbol in the group based on a reference resource position of the group, the reference resource position having an association with the physical resource position of the DMRS.

In an embodiment, the association between the reference resource position and the physical resource position of the DMRS includes one or more of:
the reference resource position being identical to the physical resource position of the DMRS; and a spacing between the physical resource position of the DMRS and the reference resource position being smaller than a preset spacing.

In an embodiment, the reference resource position includes one or more of:
the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing

In an embodiment, the processor is further configured to perform:
skipping a data modulation symbol at a first target resource position, and grouping the data modulation symbols, where the first target resource position is determined as follows:
determining the first target resource position based on a physical resource position for sending a preamble signal; or determining the first target resource position based on a second frequency domain spacing, a second time domain spacing, and the physical resource position for sending the preamble signal.

In an embodiment, the processor is further configured to perform:
determining a reserved physical resource position of the DMRS in the group based on the reference resource position of the group and the preset spacing; and
inserting the DMRS onto the reserved physical resource position in the group.

In an embodiment, the processor is further configured to perform:
mapping the DMRS onto the physical resources; and
taking the physical resource position of the DMRS as the reference resource position of the group corresponding to the DMRS.

In an embodiment, the processor is further configured to perform:
for any group, maintaining the physical resource position of a data modulation symbol at the reference resource position in the group unchanged, and moving other data modulation symbols in the group to the physical resource positions of the data modulation symbols; or
maintaining the physical resource position of the DMRS at the reference resource position in the group unchanged, and moving other data modulation symbols in the group to the physical resource positions of the data modulation symbols.

In a sixth aspect, the present disclosure provides a network device, including a memory, a transceiver and a processor:
the memory is configured to store a computer program; the transceiver is configured to transceive data under control of the processor; and the processor is configured to read the computer program in the memory and perform:
receiving data modulation symbols and a demodulation reference signal (DMRS) sent by a terminal;
determining a data modulation symbol in each group according to a reference resource position of the group, where a physical resource position of the DMRS corresponding to the group has an association with the reference resource position; and
performing channel estimation on the data modulation symbol in each group based on the DMRS corresponding to the group to obtain a DMRS channel estimation result.

In an embodiment, the association between the physical resource position of the DMRS and the reference resource position includes one or more of:
the reference resource position being identical to the physical resource position of the DMRS; and a spacing between the physical resource position of the DMRS and the reference resource position being smaller than a preset spacing.

In an embodiment, the reference resource position includes one or more of:
the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing.

In a seventh aspect, the present disclosure further provides a processor-readable storage medium storing a program for causing a processor to perform any one of the above data transmission methods.

In an eighth aspect, the present disclosure further provides a computer program product including a computer program which, when executed by a processor, implements any one of the above data transmission methods.

Details of one or more embodiments of the present disclosure are set forth in the accompanying drawings and the description below. Other features, objects, and advantages of the present disclosure will be apparent from the description, the accompanying drawings, and the claims.

### BRIEF DESCRIPTION OF THE DRAWINGS

In order to more clearly illustrate the technical solutions of the embodiments of the present disclosure or the related art, the drawings required for describing the embodiments or the related art will be described briefly below. Obviously, the drawings described below are only some embodiments of the present disclosure. For those of ordinary skill in the art, other drawings can be obtained based on the drawing without creative efforts.
FIG. 1 is a principle block diagram of URAT in some embodiments;
FIG. 2 is a schematic diagram of a single repetition sending solution in the URAT in some embodiments;
FIG. 3 is a schematic diagram of a DMRS design manner of a single repetition solution in the URAT in some embodiments;
FIG. 4a is a schematic diagram of multiplexing and configuration manners of DMRS types in some embodiments;
FIG. 4b is a schematic diagram of the multiplexing and configuration manners of the DMRS types in some other embodiments;
FIG. 5 is a schematic flowchart of a data transmission method according to some embodiments;
FIG. 6a is a schematic diagram of mapping of data modulation symbols in some embodiments;
FIG. 6b is a schematic diagram of grouping and shifting of the data modulation symbols in some embodiments;
FIG. 6c is a schematic diagram of insertion of DMRSs in some embodiments;
FIG. 6d is a schematic diagram of another grouping and shifting manner of the data modulation symbols in some embodiments;
FIG. 7a is a schematic diagram of mapping of the DMRSs in some embodiments;
FIG. 7b is a schematic diagram of mapping of the data modulation symbols in some embodiments;
FIG. 7c is a schematic diagram of grouping and shifting of the data modulation symbols in some embodiments;
FIG. 7d is a schematic diagram of another grouping and shifting manner of the data modulation symbols in some embodiments;
FIG. 8 is a schematic flowchart of a data transmission method according to some embodiments;
FIG. 9 is a structural block diagram of a data transmission apparatus according to some embodiments;
FIG. 10 is a structural block diagram of a data transmission apparatus according to some other embodiments;
FIG. 11 is an internal structural diagram of a network device according to some embodiments; and
FIG. 12 is an internal structural diagram of a terminal according to some embodiments.

### DETAILED DESCRIPTION

In the embodiments of the present invention, the term "and/or" describes an association relationship of associated objects, indicating that three relationships can exist. For example, A and/or B indicates that there are three cases of A alone, A and B together, and B alone. The character "/" generally indicates an "or" relationship between the associated objects. In the embodiments of the present disclosure, the term "multiple" means two or more than two, and other quantifiers are similar thereto.

The technical solutions in the embodiments of the present disclosure are clearly and completely described with reference to the accompanying drawings in the embodiments of the present disclosure, and apparently, the described embodiments are not all but only a part of the embodiments of the present disclosure. All other embodiments obtained by a person of ordinary skill in the art based on the embodiments of the present disclosure without creative efforts shall fall within the protection scope of the present disclosure.

Uncoordinated Random Access and NOMA Transmission (URAT) is mainly characterized by being network coordination-free and simultaneously implementing the two processes of random access and non-orthogonal multiple access transmission. Here, network coordination-free means that a network does not need to confirm an access identity of a terminal, and the network does not need to schedule transmission resources.

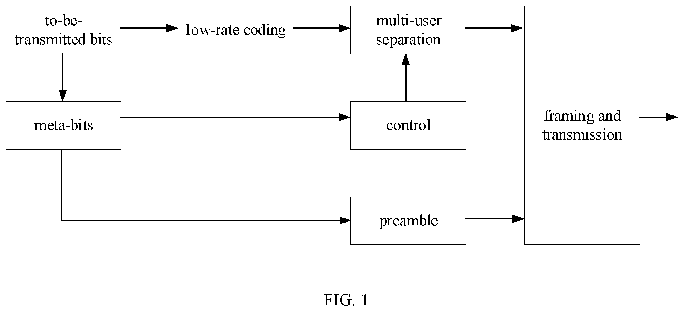

FIG. 1 is a block diagram showing the principle of the URAT, in which meta-bits are generated from to-be-transmitted bits, for example, A bits from the to-be-transmitted bits, for another example, cyclic redundancy check bits of the to-be-transmitted bits, etc. The terminal simultaneously sends a preamble sequence and a data sequence, and waits and receives acknowledgment information fed back by the base station. The acknowledgment information indicates that the network has correctly received information bits.

Specific meanings of the URAT include the following contents.
(1) Uncoordinated: the terminal does not need UE-specific network coordination signaling in the whole process from random access to multi-access transmission, and only needs broadcast cell basic configuration information. According to the broadcast cell basic configuration information, all the terminals adopt an identical sending solution, and the terminals may only differ in to-be-transmitted data bits. In order to improve the reliability of air interface transmission, the network needs to provide feedback acknowledgment information of the air interface transmission to the terminal, and an endogenous terminal identifier can be used to enable the terminal to detect the acknowledgment information sent to the terminal by the network.
(2) Non-orthogonal: all the terminals share physical resources indicated by the cell basic configuration information, and non-orthogonal multiple access transmission is realized in a coding domain, a space domain, etc. Coding domain non-orthogonal multiple access means non-orthogonal multiple access realized by coding with a finite block length. In a compressed sensing huge access framework, distances between different terminal code words can be further increased, and in addition to adoption of different interleavers for coding bits, different scrambling codes can be adopted for the coding bits, coding blocks can be repeated with unequal diversity orders, and the coding bits can be jointly interleaved with blank bits in the whole time-frequency domain. The unequal diversity orders are a design idea introduced at the earliest in PDMA, and the blank bits are occupying bits which are not transmitted. The interleaver, the scrambling code, the diversity order, a joint interleaver, etc., used by the terminal may be determined and indicated by a Cyclic Redundancy Check (CRC) code.
(3) Fused multiple access: a URAT air interface technology is uniformly adopted in the whole process from random access to multiple access transmission. The terminal sends a preamble signal, and except carrying of the meta-bit, the main purpose is to indicate to the network that there are multi-user coded signals transmitted at the same time, so as to promote the performance of detecting the multi-user coded signals, and therefore, the preamble signal plays a random access role. Interactive signalings, such as authentication, safety encryption, etc., between the terminal and the network can be transmitted through the URAT air interface technology as to-be-transmitted data, and explicit sub-processes, such as authentication, safety encryption, etc., are avoided. The network performs feedback acknowledgment on URAT of the terminal, and the terminal determines whether retransmission is needed or not according to the received feedback information.

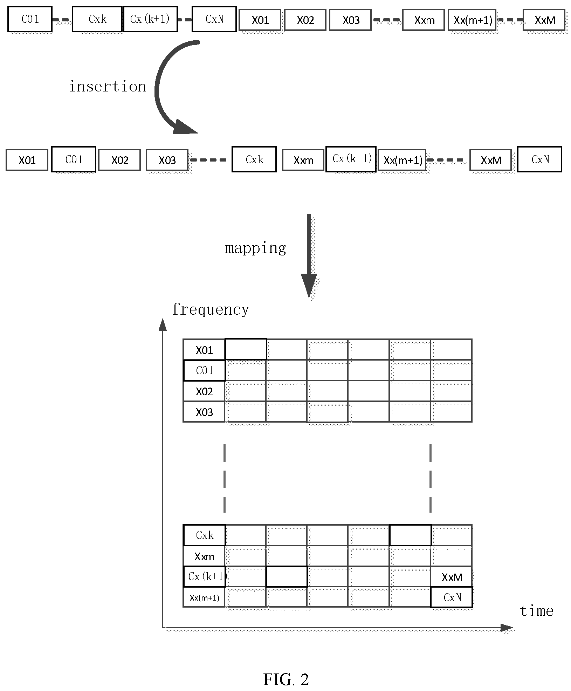

FIG. 2 shows an example of a single repetition sending solution in the URAT. FIG. 2 includes N data modulation symbols C and M blank symbols X, occupying all N+M physical resources. In addition, one or several Orthogonal Frequency Division Multiplexing (OFDM) symbols are used for transmitting DMRS. The transmission process is as follows.

The terminal receives the broadcast configuration information from the base station, obtains information of data transmission resources and information of DMRS resources, and obtains basic information such as data coding and modulation. According to the same processing flow, each terminal encodes and modulates to-be-transmitted information to generate the data modulation symbols. Multiple times of repeated transmissions are performed in a traditional manner, while only one time of repeated transmission is performed in single repetition. Assuming that the number of data modulation symbols for transmission is N, the N data modulation symbols can be represented as C01, C02, ..., Cxk, Cx(k+1), ..., CxN. The data modulation symbols C are concatenated with the M blank symbols X, the number of symbols X is M, and the blank symbols are denoted as X01, X02, ..., Xxm, Xx(m+1), ..., XxM. An interleaving pattern is derived based on the meta-bits, that is, the interleaving pattern is determined according to a predetermined table of mapping relationships between meta-bits and interleaving patterns; and whole transmission symbols, including the symbols C and the symbols X, are interleaved according to the selected interleaving pattern. According to a predetermined resource mapping manner, resource mapping is performed on the whole transmission symbols from front to rear, and then, a DMRS is inserted into the physical resources, the preamble signal corresponding to the meta-bits, the data modulation symbols after resource mapping, and the DMRS are sent out, and no signal is sent on resource units corresponding to the blank symbols X.

Currently, in a DMRS solution for New Radio (NR), a pilot is uniformly inserted in a Bandwidth Part (BWP). Since the data transmitted in the single repetition sending solution is sparse, the solution of uniformly inserting the pilot causes a large number of pilots to be inserted at positions where no data exists and channel estimation is not needed, resulting in pilot overhead waste. That is, the solution of uniformly inserting the pilots may be inefficient for single repetition.

In a preamble transmission solution, a preamble is sent centralizedly on one sub-band in the BWP, and a receiving end obtains the sent preamble through related detection. Since the originally sent preamble and the actually received preamble can be known, such information can be used for channel estimation on this sub-band, and there is no need to insert any additional pilot in this sub-band, thereby reducing pilot resources required by each user, and reducing pilot collisions of users, so as to support more users.

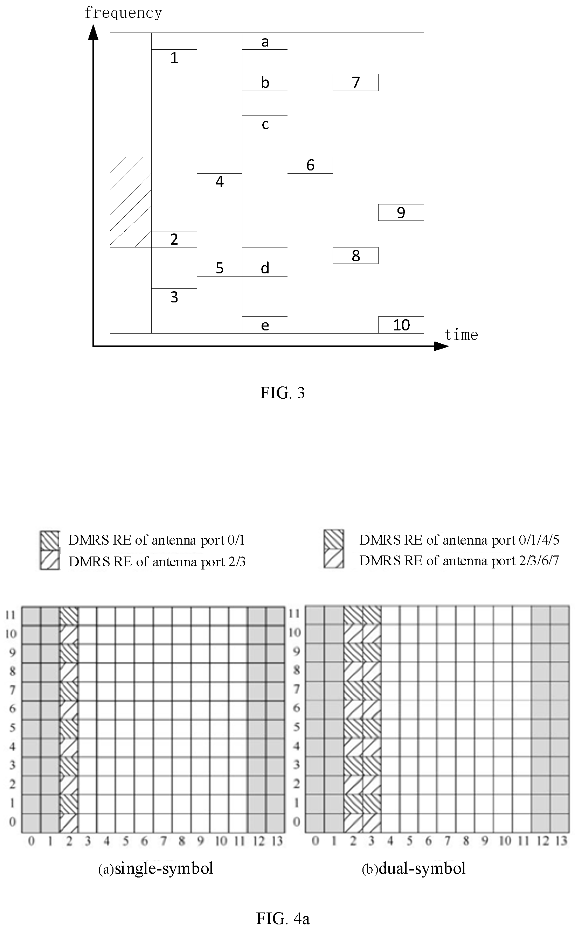

A DMRS design manner of the single repetition solution is shown in FIG. 3, and a non-uniform DMRS density design manner is adopted, which also has the disadvantage of DMRS overhead waste.

The DMRS of a data channel in the NR adopts a front-load design idea, and in each scheduling time unit, a position where the DMRS appears for the first time should be as close to a scheduling starting point as possible. The DMRS of the NR is multiplexed by adopting a Frequency-Division Multiplexing (FDM) manner and a Code Division Multiplexing (CDM) manner among ports. Within each CDM group, multiple ports are divided through Orthogonal Cover Codes (OCCs), and CDM groups are distinguished from each other by means of FDM.

The NR supports two DMRS types, and the utilized DMRS type is configured through high-layer signaling. The DMRS may include one OFDM symbol (single-symbol DMRS) or 2 OFDM symbols (dual-symbol DMRS). Multiplexing and configuration manners of the two DMRS types are specifically described as follows.

In one DMRS type with referrence to FIG. 4a, for the single-symbol DMRS, subcarriers within one OFDM symbol are divided into two groups of comb-shaped resources, the two groups being frequency-divided; each group of comb-shaped resources constitutes one CDM group; and 2-port multiplexing is supported in each CDM group through 2 OCCs, thus supporting at most 4 ports. For the dual-symbol DMRS, a time domain OCC is added on the basis of the single-symbol structure; each group of comb-shaped resources occupies two continuous OFDM symbols; and each CDM group realizes 4 orthogonal ports through 4 OCCs in the time-frequency domain, thus supporting at most 8 orthogonal ports.

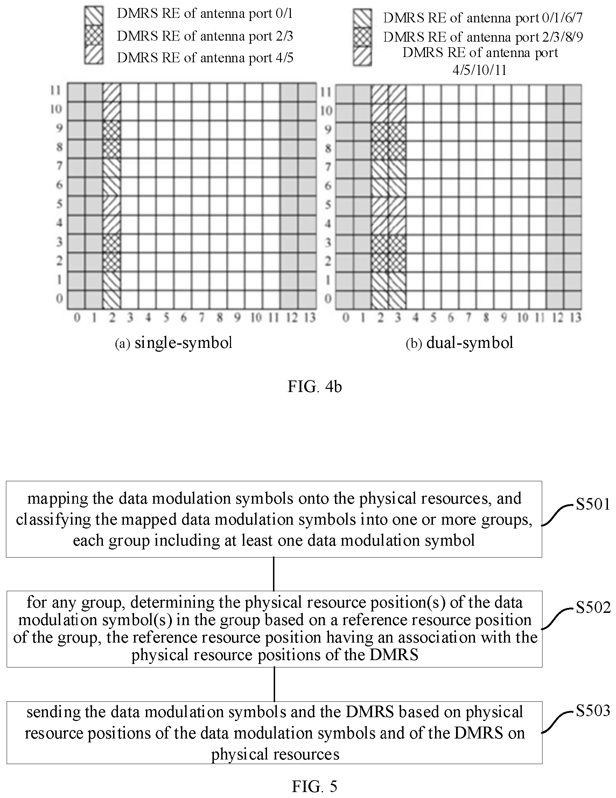

In the other DMRS type with referrence to FIG. 4b, for the single-symbol DMRS, subcarriers within one OFDM symbol are divided into 3 CDM groups; each CDM group is constituted of two pairs of adjacent two subcarriers; and 2-port multiplexing is supported within each CDM group through 2 OCCs and FDM is adopted among CDM groups, thus supporting at most 6 ports. For the dual-symbol DMRS, a time domain OCC is added on the basis of the single-symbol structure; each CDM group occupies two continuous OFDM symbols; and each CDM group supports 4 orthogonal ports through 4 OCCs in the time-frequency domain, thus supporting at most **12** ports in the 3 CDM groups.

Furthermore, in high speed mobile scenarios, the NR specifies that more DMRS symbol(s) need to be inserted in a scheduling duration in addition to the front-load DMRS, so as to ensure estimation of a time-varying channel. An NR system adopts a structure of combining the front-load DMRS and additional DMRS(s) with a configurable time domain density, and a pattern of each group of additional DMRS is repetition of the front-load DMRS, so that each group of additional DMRS, being consistent with the front-load DMRS, can occupy at most two continuous OFDM symbols. Depending on specific usage scenarios and the mobility, at most 3 groups of additional DMRSs may be configured, and the number of the additional DMRS(s) depends on a high-layer parameter configuration and the specific scheduling duration.

The URAT solution oriented to 6G cancels most coordination between the terminal and the network, and can support the scenario with a huge number of terminals. However, in the URAT, due to lack of the network coordination, completely orthogonal pilot cannot be allocated to the terminal, and the terminal needs to autonomously select pilot for sending.

In several current DMRS configurations of the NR, the DMRS of the dual-symbol Type2 only supports at most 12 users, and in the case where a huge number of terminals autonomously select the pilots, there is a serious pilot collision problem. Hence, the DMRS cannot be directly applied to the URAT solution, and an enhancement design is required to support more users. Although the preamble may be used as the pilot, a bandwidth occupied by the preamble is usually small and cannot be consistent with a bandwidth occupied by the data, and therefore, the preamble cannot serve as the pilot needed by the data occupying other bandwidths. Further, in single repetition transmission, if the DMRS is uniformly inserted into a region where there is no frequency domain overlapping with the preamble or a region far from the preamble signal, the pilot overhead is relatively large.

In view of the above, a single repetition data transmission solution for the URAT solution is provided according to an embodiment of the present disclosure, which implements data transmission through flexible data and DMRS grouping design in the region where there is no frequency domain overlapping with the preamble or the region far from the preamble signal, achieving relatively low pilot overhead and realtively satisfactory channel estimation performance.

The terminal device related in the embodiments of the present disclosure may be a device providing voice and/or data connectivity for a user, a handheld device having a wireless connection function, other processing devices connected to a wireless modem, or the like. The name of the terminal device may be different in different systems. For example, in a 5G system, the terminal device may be referred to as User Equipment (UE). A wireless terminal device may be a USB storage device, other personal computer memory devices, and encryption dogs, or can be communicated with one or more Core Networks (CNs) via a Radio Access Network (RAN), and the wireless terminal device may be a mobile terminal device, such as a mobile telephone (or "cellular" telephone) and a computer having a mobile terminal device, e.g., a portable, pocket, handheld, computer-built-in or vehicle-mounted mobile apparatus, and may exchange languages and/or data with the RAN. Examples of the device include Personal Communication Service (PCS) phones, cordless phones, Session Initiation Protocol (SIP) phones, Wireless Local Loop (WLL) stations, Personal Digital Assistants (PDAs), personal computers, tablet computers, Machine-type Communication (MTC) terminal devices, etc. The wireless terminal device may also be referred to as a system, a subscriber unit, a subscriber station, a mobile station, a mobile, a remote station, an access point, a remote terminal, an access terminal, a user terminal, a user agent, a user device, radio access apparatuses and routers/modems satisfying limitations of the definition, etc., which is not limited in the embodiments of the present disclosure.

The network device related in the embodiment of the present disclosure may be a base station, and the base station may include a plurality of cells for serving the terminal. The base station may also be called an access point, or a device in the access network that is communicated with the wireless terminal device over an air interface through one or more sectors, or other names, depending on particular application occasions. The network device may be configured to exchange received air frames with Internet Protocol (IP) packets as a router between the wireless terminal device and the rest of the access network, which may include an IP communication network. The network device may also coordinate attribute management for the air interface. For example, the network device related in the embodiment of the present disclosure may be an evolved network device (evolutional Node B, eNB or e-NodeB) in a Long Term Evolution (LTE) system, a 5G base station (gNB) in a 5G network architecture (next generation system), a home evolved base station (Home evolved Node B, HeNB), a relay node, a home base station (femto), a pico base station (pico), a network test device, etc., which is not limited in the embodiment of the present disclosure. In some network structures, the network device may include Centralized Unit (CU) nodes and Distributed Unit (DU) nodes, which may be geographically separated.

A data transmission method is provided according to an exemplary embodiment, and it is described with an example that the method is applied to a terminal device. Referring to FIG. 5, the data transmission method may include steps 501 to 503.

Step 503 includes: sending data modulation symbols and a demodulation reference signal (DMRS) based on physical resource positions of the data modulation symbols and of the DMRS on physical resources.

The physical resource positions of the data modulation symbols on the physical resources can be determined by means of steps 501 and 502.

Step 501 includes: mapping the data modulation symbols onto the physical resources, and classifying the mapped data modulation symbols into one or more groups, each group including at least one data modulation symbol.

Step 502 includes: for any group, determining the physical resource position(s) of the data modulation symbol(s) in the group based on a reference resource position of the group, the reference resource position having an association with a physical resource position of the DMRS.

In the embodiment of the present disclosure, before performing data transmission, the terminal may perform Quadrature Phase Shift Keying (QPSK)/16 Quadrature Amplitude Modulation (QAM)/64QAM/256QAM/1024QAM, etc., on to-be-transmitted bits to obtain a data modulation symbol sequence composed of multiple data modulation symbols. The 16QAM is QAM including 16 symbols, the 64QAM is QAM including 64 symbols, the 256QAM is QAM including 256 symbols, and the 1024QAM is QAM including 1024 symbols.

In the embodiment of the present disclosure, by adjusting the physical resource positions of some of the data modulation symbols on the physical resources, the physical resource positions of multiple data modulation symbols can be adjacent or close, and a corresponding DMRS is mapped or inserted at a position adjacent to or close to the physical resource positions of the multiple data modulation symbols, so that all the multiple data modulation symbols can perform processings such as channel estimation and demodulation by using the DMRS, thereby significantly reducing the DMRS overhead.

Exemplarily, after the data modulation symbol sequence is obtained, respective data modulation symbols in the data modulation symbol sequence may be mapped onto the physical resources, e.g., Resource Elements (REs), according to a pre-selected interleaving pattern, or a pre-appointed interleaving pattern, or an interleaving pattern determined based on meta-bits.

In the embodiment of the present disclosure, the mapped data modulation symbols (hereinafter, referred to as data modulation symbols for short) may be sequentially classified into multiple groups according to an appointed grouping manner, where each group may include at least one data modulation symbol. Exemplarily, data modulation symbols other than data modulation symbols those using the preamble signal for channel estimation may be classified into multiple groups, each group including an identical preset number of data modulation symbol(s), and if the number of the finally remaining data modulation symbol(s) is lower than the preset number, the finally remaining data modulation symbol(s) is(are) directly classified as one group.

For example, the groups are provided with reference resource positions. With one group as an example, the reference resource position of the group may be determined, and the physical resource position of each data modulation symbol in the group may be determined based on the reference resource position of the group.

In an exemplary embodiment, the reference resource position may include one or more of the following positions: the physical resource position of a target data modulation symbol in the group and the physical resource position of a DMRS corresponding to the group. The target data modulation symbol includes a pre-designated data modulation symbol in the group.

In the embodiment of the present disclosure, the target data modulation symbol may include the pre-designated data modulation symbol in the group. For example, the first data modulation symbol or the centered data modulation symbol in the group may be designated as the target data modulation symbol. In the embodiment of the present disclosure, a designating manner of the target data modulation symbol is not specifically limited as long as all the groups use the same designating manner. After the target data modulation symbol is determined, the terminal may use the physical resource position of the target data modulation symbol as the reference resource position.

Alternatively, the physical resource position of the DMRS corresponding to the group may be determined first, and the physical resource of the DMRS is used as the reference resource position. The DMRS corresponding to the group is a DMRS configured for channel estimation and demodulation of the data modulation symbol(s) in the group. In a case where one DMRS corresponds to the group, the physical resource position of the DMRS may be determined as the reference resource position; alternatively, in a case where multiple DMRSs correspond to the group, the physical resource position of a pre-designated DMRS in the multiple DMRSs (e.g., the physical resource position of the first DMRS, etc.) may be determined, and the physical resource position of the pre-designated DMRS may be used as the reference resource position.

In the embodiment of the present disclosure, a setting manner of the reference resource position is not specifically limited, as long as all the groups adopt the same setting manner to set the reference resource positions.

After the reference resource position of each group is determined, the physical resource position of each data modulation symbol in the group may be determined based on the reference resource position of the group. In an exemplary embodiment, a spacing between the physical resource position of each data modulation symbol in the group and the reference resource position of the group is smaller than a preset spacing, and the preset spacing includes a first frequency domain spacing and/or a first time domain spacing.

The first frequency domain spacing and the first time domain spacing may be preset spacings. For example, the first frequency domain spacing may be T1 subcarrier(s), and the first time domain spacing may be T2 Orthogonal Frequency Division Multiplexing (OFDM) symbol(s), where specific values of T1 and T2 may be set by those skilled in the art according to requirements, for example, set in consideration of dimensions such as the precision requirement and the number of group(s). For instance, the higher the precision is, the smaller the value is; or the smaller the number of group(s) is, the larger the number of the data modulation symbols in the group is, and accordingly, the larger the value is because the value should be larger than the number of the data modulation symbols in the group.

Exemplarily, based on the reference resource position and the preset spacing of the group, available physical resource positions of the group may be determined, and the physical resource position may be allocated to each data modulation symbol from the available physical resource positions of the group. The available physical resource positions of the group may define a physical resource region, and the data modulation symbols located in the physical resource region can all be subjected to processings such as channel estimation and demodulation by using the DMRS corresponding to the group.

In an example, after the target data modulation symbol in the group is determined, a resource position where the target data modulation symbol is located may be used as the reference resource position; in addition, physical resource positions with frequency domain spacings from the reference resource position smaller than the first frequency domain spacing may be used as the available physical resource positions of the group, or physical resource positions with time domain spacings from the reference resource position smaller than the first time domain spacing may be used as the available physical resource positions of the group. Further, data modulation symbols in the group other than the target data modulation symbol may be sequantially allocated with physical resource positions from the available physical resource positions of the group, that is, the physical resource positions of respective data modulation symbols in the group may be determined.

In another example, the physical resource position of the DMRS corresponding to the group may be used as the reference resource position of the group; in addition, physical resource positions with frequency domain spacings from the reference resource position smaller than the first frequency domain spacing may be used as the available physical resource positions of the group, or physical resource positions with time domain spacings from the reference resource position smaller than the first time domain spacing may be used as the available physical resource positions of the group. Further, data modulation symbols in the group other than the target data modulation symbol may be sequantially allocated with physical resource positions from the available physical resource positions of the group, that is, the physical resource positions of respective data modulation symbols in the group may be determined.

In an example, when the available physical resource positions of the group are determined based on the reference resource position and the preset spacing, a preset resource position determination manner may be adopted. The resource position determination manner may indicate a specific position of the reference resource position among the available physical resource positions of the group, for example, indicate that the reference resource position is centered in the available physical resource positions of the group, or indicate that the reference resource position is at the head, the tail, etc., of the available physical positions of the group. Exemplarily, in response to indicating that the reference resource position is centered, physical resource positions on both sides (in a frequency domain direction or a time domain direction) of the reference resource position with spacings from the reference resource position smaller than the preset spacing may be used as the available physical resource positions of the group. Alternatively, in response to indicating that the reference resource position is at the head or the tail, physical resource positions behind or in front of (in the frequency domain direction or the time domain direction) the reference resource position with spacings from the reference resource position smaller than the preset spacing may be used as the available physical resource positions of the group.

After the available physical resource positions of each group are determined, the available physical resource positions of the group can be sequentially allocated to the data modulation symbols in the group. After the physical resource positions are allocated, a sequence of the data modulation symbols in the same group is unchanged; in addition, after data transmission is performed using the allocated physical resource positions, the data modulation symbols in the same group at a network device side can be subjected to channel estimation and data demodulation using the DMRS corresponding to the group.

In the embodiment of the present disclosure, for any group, the reference resource position of the group has an association with the physical resource position of the DMRS corresponding to the group. The association between the reference resource position and the physical resource position of the DMRS includes one or more of:
the reference resource position being identical to the physical resource position of the DMRS; and, a spacing between the physical resource position of the DMRS and the reference resource position being smaller than a preset spacing.

In the embodiment of the present disclosure, the physical resource position of the DMRS corresponding to the group may be used as the reference resource position of the group, and in this case, the reference resource position of the group is identical to the physical resource position of the DMRS corresponding to the group. Alternatively, the physical resource position of the target data modulation symbol in the group may be used as the reference resource position, and in this case, the physical resource position of the DMRS corresponding to the group should be within the available physical resource positions of the group, that is, the spacing between the physical resource position of the DMRS corresponding to the group and the reference resource position of the group is smaller than the preset spacing.

If the physical resource position of the DMRS and the reference resource position of the group meet any of the above associations, the data modulation symbols in the group all can be subjected to channel estimation and demodulation processings using the DMRS, thereby significantly reducing the DMRS overhead and improving the channel estimation precision.

In the embodiment of the present disclosure, after the physical resource positions of the data modulation symbols and the DMRS on the physical resources are determined, the data modulation symbols and the DMRS may be sent to the network device based on the physical resource positions of the data modulation symbols and the DMRS. After receiving the data modulation symbols and the DMRS sent by the terminal, the network device may perform operations such as channel estimation and data demodulation on the data modulation symbols in each group by using the DMRS corresponding to the group.

In the data transmission method according to the embodiment of the disclosure, the terminal may map the data modulation symbols onto the physical resource, and classify the mapped data modulation symbols into the one or more groups. For any group, the terminal determines the physical resource positions of the data modulation symbols in the group based on the reference resource position of the group, the reference resource position having an association with the physical resource position of the DMRS, and the terminal sends the data modulation symbols and the DMRS based on the physical resource positions of the data modulation symbols and the DMRS on the physical resources. In the data transmission method according to the embodiment of the disclosure, the data modulation symbols are classified into the groups, and the physical resource positions of the data modulation symbols and the physical resource positions of the DMRSs in the groups are determined based on the reference resource positions of the groups, so that the multiple data modulation symbols in the same group can be subjected to channel estimation and data demodulation by using the same DMRS, thereby effectively reducing the overhead of the DMRS. Meanwhile, since the physical resource positions of the DMRSs and the data modulation symbols in the groups are limited by the reference resource positions, the accuracy of channel estimation can be improved.

In an exemplary embodiment, classifying the mapped data modulation symbols into one or more groups may be implemented by the following step:
skipping data modulation symbol(s) at a first target resource position, and grouping the data modulation symbols.

The first target resource position is determined as follows: determining the first target resource position based on a physical resource position for sending a preamble signal; or, determining the first target resource position based on a second frequency domain spacing, a second time domain spacing, and the physical resource position for sending the preamble signal.

The second frequency domain spacing and the second time domain spacing may be preset spacings. For example, the second frequency domain spacing may be T3 subcarrier(s), and the second time domain spacing may be T4 OFDM symbol(s), where specific values of T3 and T4 may be set by those skilled in the art according to requirements. For example, the higher the precision requirement is, the smaller the value is, or the lower the DMRS overhead requirement is, the larger the value is.

In the embodiment of the present disclosure, the physical resource position for sending the preamble signal may be directly determined as the first target resource position. Alternatively, the physical resource position for sending the preamble signal and physical resource positions located near the physical resource position for sending the preamble signal may be determined as the first target resource position. For example, the physical resource position for sending the preamble signal may be obtained, and physical resource positions with spacings from the physical resource position for sending the preamble signal smaller than the second frequency domain spacing and/or smaller than the second time domain spacing together with the physical resource position for sending the preamble signal may be determined as the first target resource position.

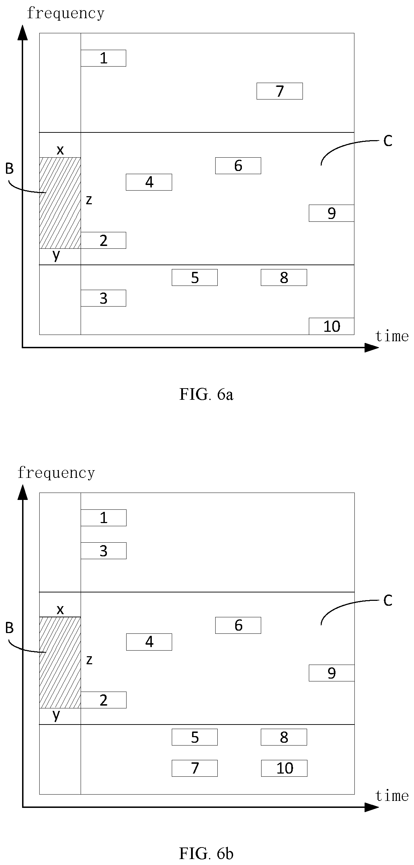

Exemplarily, the physical resource position for sending the preamble signal may constitute a region, and reference can be made to region B in FIG. 6a. Edges of the region B may be determined, the edges of the region B in FIG. 6a may include edge x, edge y, and edge z. Then, physical resource positions with spacings from the edge x of the region B smaller than the second frequency domain spacing, physical resource positions with spacings from the edge y of the region B smaller than the second frequency domain spacing, physical resource positions with spacings from the edge z of the region B smaller than the second time domain spacing, and the physical resource positions in the region B may be determined as the first target resource position.

The data modulation symbols located in the first target resource position may be subjected to channel estimation and data demodulation using the preamble signal, and the data modulation symbols located outside the first target resource position may be grouped and subjected to channel estimation and data demodulation using the DMRS corresponding to each group.

In an example, after the first target resource position is determined, during the grouping operation of the data modulation symbols, the data modulation symbols located at the first target resource position can be skipped, that is, the data modulation symbols located at the first target resource position do not participate in the grouping.

In another example, after the first target resource position is determined, during the grouping operation of the data modulation symbols, the data modulation symbols located at the first target resource position participate in the grouping. Exemplarily, assuming that the first target resource position includes position 1, after the data modulation symbol located at the position 1 is grouped and the physical resource position for the data modulation symbol is re-determined, the physical resource position of a next data modulation symbol behind the data modulation symbol needs to be determined as position 1, that is, the data modulation symbols at the first target resource position need to be complemented.

It should be noted that, in a case where the available physical resource positions of the group overlap with the first target resource position, an overlapped region may be only used as the first target resource position, the number of physical resource positions in the overlapped region is determined, the first target resource position is skipped, and an adjacent region of the first target resource position is used as the available physical resource positions of the group. The number of physical resource positions in the adjacent region is identical to the number of the physical resource positions in the overlapped region.

In an exemplary embodiment, classifying the data modulation symbols into multiple groups may be implemented by the following step:
determining every preset number of data modulation symbols as one group in sequence from a start position of the data modulation symbols, until all the data modulation symbols are grouped.

In the embodiment of the present disclosure, when grouping the data modulation symbols, every preset number of data modulation symbols may be determined as one group in sequence from the start position of the data modulation symbols to obtain multiple groups. It should be noted that the data modulation symbols located at the first target resource position are skipped in the grouping process. The preset number may be a number set in advance, or a number calculated based on a preset number of groups and the number of the data modulation symbols. In the embodiment of the present disclosure, the determination manner of the preset number is not specifically limited.

In an example, the first target resource position may be determined based on the second frequency domain spacing, the second time domain spacing, and a resource position of a physical resource for sending the preamble signal. The data modulation symbols located at the first target resource position may be used as data modulation symbols of a first type. Data modulation symbols other than the data modulation symbols of the first type may be used as data modulation symbols of a second type. The data modulation symbols of the second type are classified into multiple groups in sequence from the start position of the data modulation symbols of the second type, with every preset number of data modulation symbols as one group.

In another example, the first target resource position may be determined based on the second frequency domain spacing, the second time domain spacing, and the resource position of the physical resource for sending the preamble signal. A preset number of data modulation symbols are sequentially determined as data modulation symbols of a second type from a start position of the data modulation symbols. If i data modulation symbols located at the first target resource position exist in the preset number of data modulation symbols, the i data modulation symbols are taken as first data modulation symbols, continuous i data modulation symbols located behind the first data modulation symbols are taken as second data modulation symbols, the i second data modulation symbols are taken as data modulation symbols of a first type, and the process proceeds to the step of sequentially determining the preset number of data modulation symbols as data modulation symbols of the second type from a next position behind the data modulation symbols of the first type, until the types of all data modulation symbols are determined, and then, the data modulation symbols of the second type are classified into multiple groups.

In an exemplary embodiment, the method may further include:
for any group, maintaining the physical resource position of a data modulation symbol at the reference resource position in the group unchanged, and moving the other data modulation symbols in the group to physical resource positions of the data modulation symbols; or, maintaining the physical resource position of the DMRS at the reference resource position in the group unchanged, and moving the other data modulation symbols in the group to physical resource positions of the data modulation symbols.

In an example, after mapping is completed, each data modulation symbol has an initial physical resource position on the physical resource, and if the reference resource position is the physical resource position of the target data modulation symbol, the initial resource position (or referred to as the physical resource position) of the target data modulation symbol in the group may be maintained unchanged, and the other data modulation symbols are moved from their initial resource positions to re-determined physical resource positions of the data modulation symbols. After the movement, the data modulation symbols in the same group are all located at the available physical resource positions of the group, and therefore can all be subjected to channel estimation and demodulation using the DMRS corresponding to the group, which may significantly reduce the DMRS overhead and improve the channel estimation accuracy.

In another example, after mapping is completed, each data modulation symbol has an initial physical resource position on the physical resource, and if the reference resource position is the physical resource position of the DMRS corresponding to the group, the physical resource position of the DMRS in the group may be maintained unchanged, and the data modulation symbols in the group are moved from their initial resource positions to re-determined physical resource positions of the data modulation symbols. After the movement, the data modulation symbols in the same group are all located at the available physical resource positions of the group, and therefore can all be subjected to channel estimation and demodulation using the DMRS corresponding to the group, which may significantly reduce the DMRS overhead and improve the channel estimation accuracy.

In an exemplary embodiment, the method may further include:
determining a reserved physical resource position of the DMRS in the group according to the reference resource position of the group and the preset spacing; and inserting the DMRS onto the reserved physical resource position in the group.

In the embodiment of the present disclosure, if the reference resource position is a reference resource position in the group, the available physical resource positions of the group may be determined according to the reference resource position of the group and the preset spacing, and the reserved physical resource position of the DMRS in the group may be determined, according to a reservation policy, from the available physical resource positions of the group.

The reservation policy can be set in advance. For example, as the reservation policy, the centered physical resource position in the group may be taken as the reserved physical resource position of the DMRS, or the physical resource position at the head or the tail of the group is taken as the reserved physical resource position of the DMRS. Specifically, the number of reserved physical resource position(s) is consistent with the number of the DMRS(s) to be inserted. In the embodiment of the present disclosure, the reservation policy is not specifically limited, as long as the groups adopt the same reservation policy.

An occasion on which the DMRS is inserted is not specifically limited in the embodiment of the present disclosure. For example, the DMRS may be inserted onto the reserved physical resource position in the group after the data modulation symbols in the group have been moved to the corresponding physical resource positions; or the data modulation symbols in the group may be moved to the corresponding physical resource positions after the DMRS has been inserted onto the reserved physical resource position in the group.

In order to make the above embodiment better understood by those skilled in the art, the above embodiments are described below by a specific example. In the example, a terminal may perform mapping of data modulation symbols onto physical resources, i.e., REs, then adjust the data modulation symbols to a group aggregation state, and finally insert a DMRS symbol into each group.

Exemplarily, after generating a preamble signal, the terminal may transmit the preamble signal on one physical resource block, where the physical resource block for transmitting the preamble signal is called region B. The terminal further determines a first target resource position based on the region B, a second frequency domain spacing, and a second time domain spacing. A region formed by the first target resource position is called region C, and the region B is included in the region C, as shown in FIG. 6a. In fact, data modulation symbols in the region C are demodulated mainly using channel estimation obtained based on the preamble, and the performance of channel estimation can be ensured without inserting any DMRS into the region C or by inserting only a quite small number of DMRS(s) into the region C, thereby reducing the DMRS overhead and meanwhile supporting more users.

The terminal can map the data modulation symbols onto the physical resources by adopting a target interleaving dispersion method. Exemplarily, assuming that there are L data modulation symbols, after X blank symbols are supplemented, an interleaver with an interleaving depth of M may be used to disperse the data modulation symbols onto M physical resources configured by the network, where M=L+X+N, N is the number of physical resources occupied by the DMRS (or may also include other overhead). In the example, N is the number of the physical resources occupied by the DMRS, and the blank symbol means that no signal is transmitted on a physical resource occupied by the blank symbol. As shown in FIG. 6a to FIG. 6c, L=10, N=3, X=71, and M=84.

The terminal may adjust the physical resource positions of some of the data modulation symbols to make these data modulation symbols in the group aggregation state. Exemplarily, from a start position of the data modulation symbols, every P data modulation symbols are determined as one group in sequence, and during the classifying of the groups, the data modulation symbols located in the region C are skipped. For example, as shown in FIG. 6b, every two data modulation symbols are taken as one group, and then, from data modulation symbol 1, since data modulation symbol 2 is located in the data region C, the data modulation symbol 2 may be skipped; the data modulation symbol 1 and data modulation symbol 3 are determined as one group; and since data modulation symbol 4 and data modulation symbol 6 are located in the region C, the data modulation symbol 4 and the data modulation symbol 6 may be skipped; data modulation symbol 5 and data modulation symbol 7 are divided into one group; and the above process is continued similarly to obtain multiple groups.

Assuming that the first data modulation symbol in each group is used as a target data modulation symbol, available physical resource positions of each group can be determined based on the physical resource position of the first data modulation symbol in each group and a preset spacing. Exemplarily, physical resource positions with spacings from the physical resource position of the first data modulation symbol smaller than the preset spacing may be used as the available physical resource positions of the group, physical resource positions may be allocated to the other data modulation symbols in the group than the first data modulation symbol from the available physical resource positions of the group, and after the physical resource positions are allocated, a sending order of the data modulation symbols in the group is not changed.

The physical resource position of the first data modulation symbol in each group is remained unchanged, the following consecutive P-1 data modulation symbols in each group are moved to respective physical resource positions, the P-1 data modulation symbols are located in the vicinity of the physical resource position of the first data modulation symbol after the movement (for example, as shown in FIG. 6b, the vicinity indicates that a minimum spacing from an edge subcarrier of the first data modulation symbol is smaller than T1 subcarrier(s)). Meanwhile, a corresponding physical resource position can be reserved for the DMRS on the available physical resource positions of the group (in FIG. 6b, the reserved physical resource position of the DMRS is located between physical resource positions of 2 data modulation symbols). Exemplarily, after the data modulation symbols are moved to the physical resource positions, the physical resource positions of the data modulation symbols before the movement are filled with blank symbols, and the data modulation symbols in the region C remain unchanged.

It should be noted that the vicinity may include an adjacent or close region in the frequency domain, or an adjacent or close region in the time domain, being adjacent in the frequency domain means that the spacing between two physical resource positions is smaller than T1 subcarrier(s), and being adjacent in the time domain means that the spacing between two physical resource positions is smaller than T2 OFDM symbol(s).

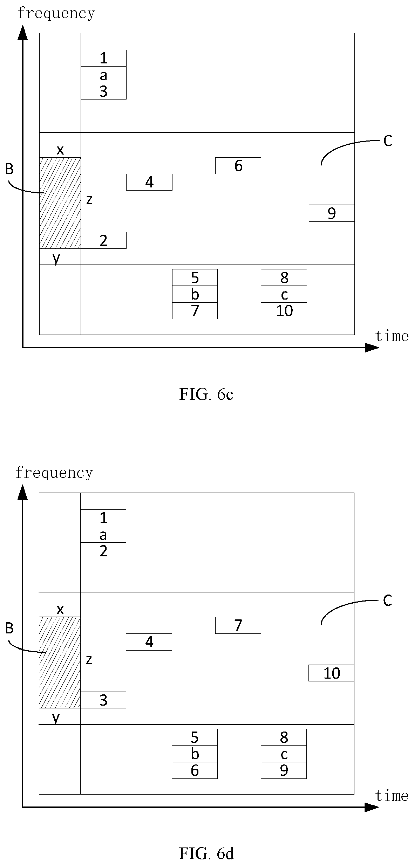

After the operations of grouping, moving, etc., are completed, the terminal can insert the DMRS into each group, and sequentially insert DMRSs in a DMRS sequence into the reserved physical resource positions of the DMRSs in the groups one by one. For example, as shown in FIG. 6c, DMRSs in the example include DMRS a, DMRS b, and DMRS c, the DMRS a is inserted between the data modulation symbol 1 and the data modulation symbol 3, the DMRS b is inserted between the data modulation symbol 5 and the data modulation symbol 7, and the DMRS c is inserted between data modulation symbol 8 and data modulation symbol 10. In the region C, a reserved physical resource position of a DMRS may also be determined, and the DMRS is inserted onto the reserved physical resource position to further improve the channel estimation performance of the region. Usually, the density of the DMRS(s) in the region C is less than that of the DMRS(s) outside the region C.

Alternatively, in another example, data modulation symbols located in the region C may also be grouped and moved, and during grouping, if a current data modulation symbol is the data modulation symbol located in the region C, the physical resource position of a subsequent data modulation symbol needs to be determined as the physical resource position of the current data modulation symbol in the region C, and the subsequent data modulation symbol does not participate in grouping any more. In this way, after data modulation symbol(s) located in the region C is(are) moved to the physical resource position(s) in the corresponding group, the subsequent data modulation symbol(s) can be moved to the region C for complementing. As shown in FIG. 6d, from the data modulation symbol 1, the data modulation symbol 1 and the data modulation symbol 2 are divided into one group, the data modulation symbol 2 is moved to the vicinity of the data modulation symbol 1 (the vicinity means that the minimum spacing from the edge subcarrier of the data modulation symbol 1 is less than T1 subcarrier(s)), furthermore, the data modulation symbol 3 is moved to the initial physical position of the data modulation symbol 2 for complementing. The data modulation symbol 5 and the data modulation symbol 6 are divided into one group, the data modulation symbol 6 is moved to the vicinity of the data modulation symbol 5, furthermore, the data modulation symbol 7 is moved to the initial physical position of the data modulation symbol 6 for complementing. The data modulation symbol 8 and data modulation symbol 9 are divided into one group, the data modulation symbol 9 is moved to the vicinity of the data modulation symbol 8, furthermore, the data modulation symbol 10 is moved to the initial physical position of the data modulation symbol 9 for complementing.

After the grouping and moving of the data modulation symbols and the insertion of the DMRSs are completed, the data modulation symbols and the DMRSs may be sequentially sent to the base station based on the current physical resource positions of the data modulation symbols and the DMRSs, so that the base station may group the data modulation symbols and the DMRSs in the same grouping manner as the terminal side after receiving the data modulation symbols and the DMRSs, and perform channel estimation, demodulation, etc., on the data modulation symbols in the groups by using the DMRSs corresponding to the groups.

In an exemplary embodiment, the method may further include:
mapping a DMRS onto a physical resource; and taking a physical resource position of the DMRS as a reference resource position of a group corresponding to the DMRS.

For example, the DMRS may be obtained through meta-bits, and the meta-bits may be obtained based on to-be-transmitted bits. For example, the meta-bits are a preset number of bits in the to-be-transmitted bits, or may be cyclic redundancy check bits of the to-be-transmitted bits, or the like. Exemplarily, a DMRS sequence corresponding to the meta-bits may be determined by a preset mapping relationship between DMRSs and the meta-bits. The embodiments of the present disclosure do not specifically limit a manner of determining the DMRS sequence based on the meta-bits, and any manner of determining the DMRS sequence based on the meta-bits is applicable to the embodiments of the present disclosure.

After the DMRS sequence is obtained, a proper number of DMRSs in the DMRS sequences can be mapped onto time-frequency domain resource positions by adopting manners of equal-spacing uniform reservation, uniform random reservation, etc. In the process of grouping the data modulation symbols, the data modulation symbols located at the first target resource position may be skipped and multiple groups are obtained, where for the specific grouping process, reference may be made to the foregoing embodiments, and details are not repeated herein.

In order to make the above embodiment better understood by those skilled in the art, the above embodiments are described below by a specific example. In the example, a DMRS-centric group transmission method is considered. A terminal performs mapping of data modulation symbols onto physical resources, i.e., REs first, performs mapping of DMRSs to physical resources, i.e., REs (in the embodiment of the present disclosure, whether mapping of the DMRSs to the physical resources is performed before or after mapping of the data modulation symbols to the physical resources is not specifically limited), and finally, adjusts the data modulation symbols to the vicinities of respective DMRSs, so as to realize a group aggregation state.

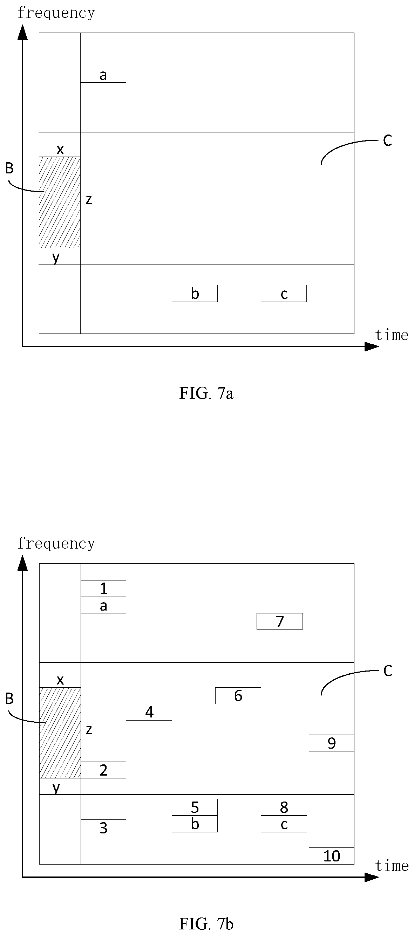

Exemplarily, after generating a preamble signal, the terminal may transmit the preamble signal on one physical resource block, where the physical resource block for transmitting the preamble signal is called region B. The terminal further determines a first target resource position based on the physical resource block, a second frequency domain spacing, and a second time domain spacing, and a region formed by the first target resource position is called region C. The region B is included in the region C, as shown in FIG. 7a. Data modulation symbols in the region C are demodulated mainly using channel estimation obtained based on the preamble, and the performance of channel estimation can be ensured without inserting any DMRS into the region C or by inserting only a quite small number of DMRS(s) into the region C, thereby reducing the DMRS overhead and meanwhile supporting more users.

Outside the region C, the terminal may reserve N physical resource positions for the DMRSs in an equal-spacing uniform reservation manner, in a uniform random reservation manner, or the like. N is the number of the time-frequency domain resources occupied by the DMRSs (and other overhead), and the terminal maps the DMRSs onto the corresponding physical resource positions. As shown in FIG. 7b, the reservation manner is a uniform random manner. N equals to 3 as shown in FIG. 7b. In this example, the physical resource positions of the N DMRSs are located outside the region C, that is, the DMRSs are not inserted into the first target resource position.

The terminal can map the data modulation symbols onto the physical resources by adopting a target interleaving dispersion method. In a scenario where mapping of the DMRSs is performed first, the terminal may disperse L data modulation symbols to M-N time-frequency domain resources configured by the network by using an interleaver with an interleaving depth of M-N after X blank symbols are supplemented, where M=L+X+N. As shown in FIG. 7a to FIG. 7c, L=10, N=3, X=71, and M=84. Alternatively, in a scenario where mapping of the data modulation symbols is performed first, an interleaver with an interleaving depth of M is used.

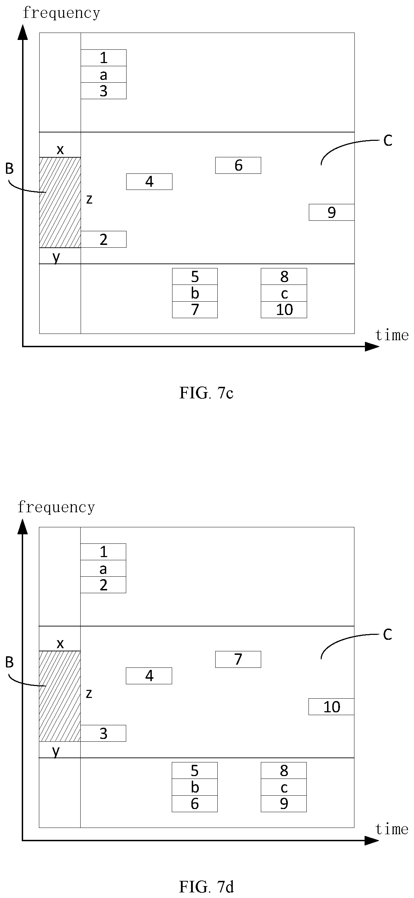

The terminal may adjust the resource positions of some of the data modulation symbols in the vicinities of the physical resource positions of the DMRSs, so as to realize the group aggregation state. Exemplarily, from a start position of the data modulation symbols, every P data modulation symbols are determined as one group in sequence, and during the classifying of the groups, the data modulation symbol(s) located in the region C is(are) skipped. For example, as shown in FIG. 7c, every two data modulation symbols are taken as one group, and then, from data modulation symbol 1, since data modulation symbol 2 is located in the data region C, the data modulation symbol 2 may be skipped, and the data modulation symbol 1 and data modulation symbol 3 are determined as one group; since data modulation symbol 4 and data modulation symbol 6 are located in the region C, the data modulation symbol 4 and the data modulation symbol 6 may be skipped, and data modulation symbol 5 and data modulation symbol 7 are classified into one group; and the above process is continued similarly to obtain multiple groups.

The multiple groups sequentially correspond to multiple DMRSs in one-to-one correspondence (in the example, each group corresponds to one DMRS as an example). Available physical resource positions of each group can be determined according to the physical resource position of the DMRS corresponding to each group and a preset spacing. Exemplarily, physical resource positions with spacings from the physical resource position of the DMRS smaller than the preset spacing may be used as the available physical resource positions of the group, physical resource positions may be allocated to the data modulation symbols in the group from the available physical resource positions of the group, and after the physical resource positions are allocated, a sending order of the data modulation symbols in the group is not changed.

The time-frequency domain resource positions of the DMRSs in respective groups are remained unchanged, multiple data modulation symbols in respective groups are moved to respective physical resource positions, and the multiple data modulation symbols are located in the vicinities of the time-frequency domain resource positions of the DMRSs after the movement (for example, a minimum spacing from an edge subcarrier where the DMRS symbol is located is less than T3 subcarrier(s)).

Exemplarily, as shown in FIG. 7c, the DMRSs in the example include DMRS a, DMRS b, and DMRS c. The DMRS a corresponds to group 1, and the group 1 includes data modulation symbol 1 and data modulation symbol 3. The DMRS b corresponds to group 2, and the group 2 includes data modulation symbol 5 and data modulation symbol 7. The DMRS c corresponds to group 3, and the group 3 includes data modulation symbol 8 and data modulation symbol 10. The physical resource positions of the DMRS a, the DMRS b, and the DMRS c are remained unchanged. In addition, the resource positions of the DMRS a, the DMRS b, and the DMRS c are set to be located in the middles of the available physical resource positions of the groups. As a result, after the data modulation symbol 1 and the data modulation symbol 3 in the group 1 are moved to their respective physical resource positions, the data modulation symbol 1 and the data modulation symbol 3 are located on both sides of the DMRS a; after the data modulation symbol 5 and the data modulation symbol 7 in the group 2 are moved to their respective physical resource positions, the data modulation symbol 5 and the data modulation symbol 7 are located on two sides of the DMRS b; and after the data modulation symbol 8 and the data modulation symbol 10 in the group 3 are moved to their respective physical resource positions, the data modulation symbol 8 and the data modulation symbol 10 are located on both sides of the DMRS c.

Alternatively, in another example, data modulation symbols located in the region C may also be grouped and moved, and during grouping, if a current data modulation symbol is the data modulation symbol located in the region C, the physical resource position of a subsequent data modulation symbol needs to be determined as the physical resource position of the current data modulation symbol in the region C, and the subsequent data modulation symbol does not participate in grouping any more. In this way, after data modulation symbol(s) located in the region C is(are) moved to the physical resource position(s) in the corresponding group, the subsequent data modulation symbol(s) can be moved to the region C for complementing. As shown in FIG. 7d, from the data modulation symbol 1, the data modulation symbol 1 and the data modulation symbol 2 are classified into one group, the data modulation symbol 2 is moved to the vicinity of the DMRS a (the vicinity means that the minimum spacing from the edge subcarrier of the DMRS a is less than T1 subcarrier(s)), furthermore, the data modulation symbol 3 is moved to the initial physical resource position of the data modulation symbol 2 for complementing. The data modulation symbol 5 and the data modulation symbol 6 are classified into one group, the data modulation symbol 6 is moved to the vicinity of the DMRS b, furthermore, the data modulation symbol 7 is moved to the initial physical resource position of the data modulation symbol 6 for complementing. The data modulation symbol 8 and data modulation symbol 9 are classified into one group, the data modulation symbol 9 is moved to the vicinity of the DMRS c, furthermore, the data modulation symbol 10 is moved to the initial physical resource position of the data modulation symbol 9 for complementing.

After the grouping and moving of the data modulation symbols are completed, the data modulation symbols and the DMRSs may be sequentially sent to the base station based on the current physical resource positions of the data modulation symbols and the DMRSs, so that the base station may group the data modulation symbols and the DMRSs in the same grouping manner as the terminal side after receiving the data modulation symbols and the DMRSs, and perform channel estimation, demodulation, etc., on the data modulation symbols in the groups by using the DMRSs corresponding to the groups.

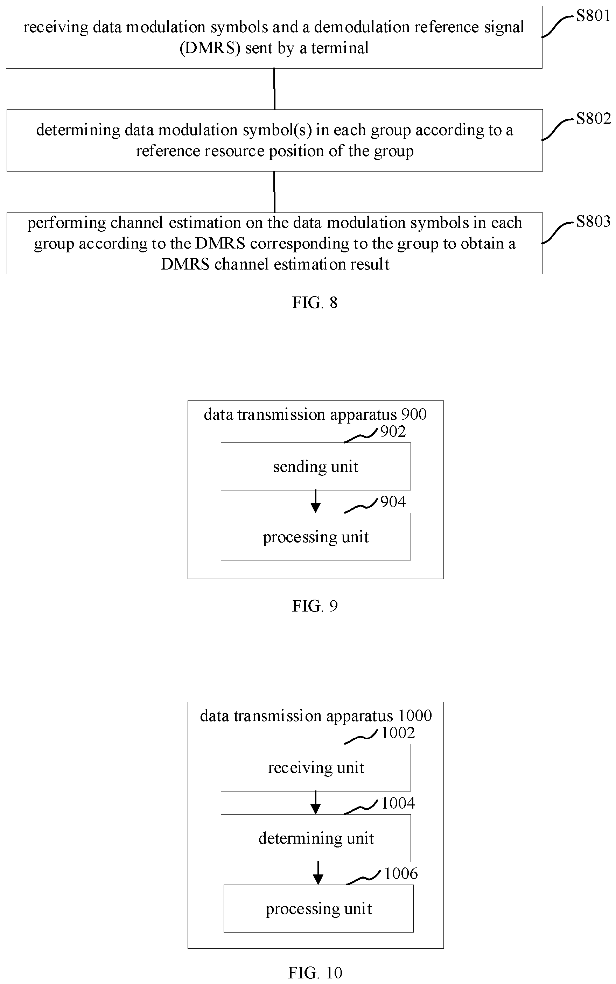

In an exemplary embodiment, a data transmission method is provided. A description is given with an example that the method is applied to a network device, and the network device may include a base station, etc. As shown in FIG. 8, the method includes the following steps 801 to 803.

Step 801 includes: receiving data modulation symbols and a demodulation reference signal (DMRS) sent by a terminal.

Step 802 includes: determining data modulation symbol(s) in each group according to a reference resource position of the group, where a physical resource position of the DMRS corresponding to the group has an association with the reference resource position.

Step 803 includes: performing channel estimation on the data modulation symbol(s) in each group according to the DMRS corresponding to the group to obtain a DMRS channel estimation result.

In the embodiment of the present disclosure, after grouping the data modulation symbols, the terminal may determine the reference resource position of each group according to a preset setting manner of the reference resource position, and determine the physical resource position of each data modulation symbol in the group according to the reference resource position in the group. In addition, each group has the corresponding DMRS, so that the data modulation symbols in the same group may be subjected to channel estimation and data demodulation using the uniform DMRS, thereby reducing the DMRS overhead. For a specific process, reference can be made to the related description in the foregoing embodiments, and details are not limited in the embodiment of the present disclosure. After determining the physical resource positions of the data modulation symbols and the DMRSs, the terminal may send the data modulation symbols and the DMRSs to the network device based on the physical resource positions of the data modulation symbols and the DMRSs.

For example, the terminal may send a preamble signal to the base station. Since the preamble signal is generated based on meta-bits, the meta-bits may be obtained based on the preamble signal. The terminal and the network device may determine an adopted interleaving pattern by using the meta-bits, and then, after obtaining the meta-bits, the network device may determine the interleaving pattern used by the terminal based on the meta-bits, and further determine the reference resource position corresponding to each group based on the interleaving pattern, the data modulation symbols and the DMRSs received by the network device, and the preset setting manner of the reference resource position which is the same as that used by the terminal. Then, the terminal determines available physical resource positions of each group based on the reference resource position and a preset spacing. For specific manners for determining the reference resource position and the available physical resource positions of the group, reference can be made to the related description in the foregoing embodiments, and details are not limited in the embodiment of the present disclosure.

After the available physical resource positions of each group are determined, the data modulation symbols located within the available resource positions of the group may be classified into the group.

In the embodiment of the present disclosure, after the available physical resource positions of respecctive groups are determined, the DMRSs located in the available physical resource positions of the groups may be respectively used as the DMRSs corresponding to the groups, and channel estimation may be performed on the resource positions corresponding to the data modulation symbols in each group by using the DMRS corresponding to each group, so as to obtain a DMRS channel estimation result.

In an example, the reference resource position includes one or more of the following positions: the physical resource position of a target data modulation symbol in the group and the physical resource position of a DMRS corresponding to the group. The target data modulation symbol includes a pre-designated data modulation symbol in the group.

In an example, a spacing between the physical resource position of each data modulation symbol in the group and the reference resource position of the group is smaller than a preset spacing, and the preset spacing includes a first frequency domain spacing and/or a first time domain spacing.

For a specific process for determining the reference resource position, a specific process for determining the available physical resource positions of each group according to the reference resource position and the preset spacing, etc., reference can be made to the related description in the foregoing embodiments, and details are not limited in the embodiment of the present disclosure.

In the embodiment of the present disclosure, the association between the physical resource position of the DMRS and the reference resource position includes one or more of: the reference resource position being identical to the physical resource position of the DMRS; and, a spacing between the physical resource position of the DMRS and the reference resource position being smaller than a preset spacing.

In the embodiment of the present disclosure, after receiving the preamble signal, the network device may perform, based on the preamble signal, channel estimation on a physical resource position for sending the preamble signal to obtain a preamble channel estimation result, and by combining the preamble channel estimation result and the DMRS channel estimation result, the network device may obtain channel estimation results at all the physical resource positions through an interpolation algorithm, the channel estimation results being used for subsequent demodulation of the data modulation symbols.

In the data transmission method according to the embodiment of the disclosure, after receiving the data modulation symbols and the DMRSs sent by the terminal, the network device can determine the data modulation symbols in the groups according to the reference resource positions of the groups, the physical resource positions of the DMRSs corresponding to the groups have associations with the reference resource positions, and the network device can perform channel estimation on the data modulation symbols in the groups according to the DMRSs corresponding to the groups, so as to obtain the DMRS channel estimation results. In the data transmission method according to the embodiment of the disclosure, the data modulation symbols are classified into the groups, and the physical resource positions of the data modulation symbols and the physical resource positions of the DMRSs in the groups are determined based on the reference resource positions of the groups, so that the multiple data modulation symbols in the same group can be subjected to channel estimation and data demodulation by using the same DMRS, thereby effectively reducing the overhead of the DMRS. Meanwhile, since the physical resource positions of the DMRSs and the data modulation symbols in the groups are limited by the reference resource positions, the accuracy of channel estimation can be improved.

In order to make the embodiments of the present disclosure better understood by those skilled in the art, the embodiments of the present disclosure are described below by specific examples.

In an example, when performing URAT, a terminal first selects a preamble sequence to be used according to meta-bits, generates a preamble signal, and completes a sending process of the preamble signal, the meta-bits being carried in the preamble signal. By using a single repetition data modulation symbol interleaving dispersion method, the terminal determines an interleaver based on the meta-bits, processes data modulation symbols using the interleaver, and then disperses the data modulation symbols onto time-frequency domain resources configured by a network. The interleaver is determined by the meta-bits, for example, the meta-bits are used as an initialization seed of a generation register for generating M-N random ordering.

The terminal obtains multiple groups by means of classifying every preset number of data modulation symbols into one group, determines available physical resource positions of each group based on a physical resource position of a designated target modulation symbol in the group and a preset spacing, determines a physical resource position of each data modulation symbol in the group from the available physical resource positions of the group, and adjusts some of the data modulation symbols in the group onto respective physical resource positions to cause these data modulation symbols to be in a group aggregation state. Reserved physical resource positions of DMRSs are determined in the available physical resource positions of the groups, and the DMRSs are sequentially inserted into the reserved physical resource positions in the groups one by one. A DMRS sequence is determined by the meta-bits, and the meta-bits are used as UE ID in a generation process of the DMRS sequence.

The terminal sends the data modulation symbols and the DMRSs to a network device based on the physical resource positions of the data modulation symbols and the DMRSs, and does not send any signal on physical resource positions occupied by blank symbols.

After receiving the preamble signal sent by the terminal, the network device performs sequence detection on the preamble signal to obtain the meta-bits, and performs channel estimation based on a sequence detection result (actually sent signal) of the preamble signal and a received preamble sequence (actually received signal) to obtain a preamble channel detection result. The network device determines an interleaver adopted by the terminal based on the detected meta-bits, classifies the data modulation symbols into multiple groups by adopting the interleaver and through a same grouping manner as the terminal, and performs channel estimation on the physical resource position of each data modulation symbol in each group by adopting the DMRS corresponding to the group to obtain a corresponding DMRS signal estimation result. A base station further combines the preamble channel estimation result and the DMRS channel estimation results, and obtains channel responses on all the physical resource positions through an interpolation algorithm. The channel responses are used for subsequent data demodulation calculation, which includes the following steps: performing corresponding processings such as detection and decoding on the data modulation symbols, and sending feedback information to the terminal in response to determining correct reception of the URAT.

The terminal monitors the feedback information sent by the network device after the URAT is finished, stops the URAT when the feedback information sent by the network device indicates that reception of the URAT is finished correctly, and otherwise starts a new round of URAT.

In another example, when performing URAT, a terminal first selects a preamble sequence to be used according to meta-bits, generates a preamble signal, and completes a sending process of the preamble signal, the meta-bits being carried in the preamble signal. The terminal maps N DMRSs to N physical resource positions outside region C (data modulation symbols in the region C are subjected to channel estimation by using the preamble signal, and for a determination manner of the region C, reference can be made to the related description of the foregoing embodiments) by using equal-spacing uniform reservation, uniform random reservation, etc. A DMRS sequence is determined by the meta-bits, and the reserved N physical resource positions are determined by the meta-bits. For example, the DMRS sequence and the reserved N physical resource positions can be determined by using a preset mapping relationship between DMRS sequences and meta-bits and a mapping relationship between reserved physical resource positions and meta-bits.

By using a single repetition data modulation symbol interleaving dispersion method, the terminal determines an interleaver based on the meta-bits, and data modulation symbols are dispersed onto physical resources configured by a network after being processed by the interleaver. The interleaver is determined by the meta-bits, for example, the meta-bits are used as an initialization seed of a generation register for generating M-N random ordering. The terminal obtains multiple groups by means of classifying every preset number of data modulation symbols into one group, determines available physical resource positions of each group according to a physical resource position of the DMRS corresponding to the group and a preset spacing after causing the groups to be in one-to-one correspondence with the DMRSs, allocates a physical resource position to each data modulation symbol in the group from the available physical resources of the group, and adjusts the data modulation symbols in the group onto respective corresponding physical resource positions to cause these data modulation symbols to be in a group aggregation state.

The terminal sends the data modulation symbols and the DMRSs to a network device based on the physical resource positions of the data modulation symbols and the DMRSs, and does not send any signal on physical resource positions occupied by blank symbols.

After receiving the preamble signal sent by the terminal, the network device performs sequence detection on the preamble signal to obtain the meta-bits, and performs channel estimation according to a sequence detection result (actually sent signal) of the preamble signal and a received preamble sequence (actually received signal) to obtain a preamble channel detection result. The network device determines an interleaver adopted by the terminal based on the detected meta-bits, classifies the data modulation symbols into multiple groups by adopting the interleaver and through a same grouping manner as the terminal, and performs channel estimation on the physical resource positions of the data modulation symbols in the groups by adopting the DMRSs corresponding to the groups to obtain corresponding DMRS signal estimation results. A base station further combines the preamble channel estimation result and the DMRS channel estimation result, and obtains channel responses on all the physical resource positions through an interpolation algorithm, and the channel responses are used for subsequent data demodulation calculation, which includes the following steps: performing corresponding processings such as detection and decoding on the data modulation symbols, and sending feedback information to the terminal in response to determining correct reception of the URAT.

The terminal monitors the feedback information sent by the network device after the URAT is finished, stops the URAT when the feedback information sent by the base station indicates that reception of the URAT is finished correctly, and otherwise starts new URAT.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same inventive concept, an embodiment of the present disclosure further provides a data transmission apparatus for implementing the above data transmission method. The implementation solution for solving problems provided by the apparatus is similar to the implementation solution described in the above method, and therefore, for the specific definitions in one or more embodiments of the data transmission apparatus provided below, reference can be made to the definitions of the data transmission method in the above description, and the definitions are not repeated herein.

In an exemplary embodiment, as shown in FIG. 9, there is provided a data transmission apparatus, including a sending unit 902 and a processing unit 904.

The sending unit 902 is configured to send data modulation symbols and a demodulation reference signal (DMRS) based on physical resource positions of the data modulation symbols and a physical resource position of the DMRS on physical resources_{∘}

The physical resource positions of the data modulation symbols on the physical resources are determined by the processing unit 904, and the processing unit 904 is configured to:
map the data modulation symbols onto the physical resources, and classify the mapped data modulation symbols into one or more groups, each group including at least one data modulation symbol; and
for any group, determine the physical resource position of each data modulation symbol in the group based on a reference resource position of the group, the reference resource position having an association with the physical resource position of the DMRS.

In an example, the association relationships between the reference resource position and the physical resource position of the DMRS includes one or more of:
the reference resource position being identical to the physical resource position of the DMRS; and a spacing between the physical resource position of the DMRS and the reference resource position being smaller than a preset spacing.

In an example, the reference resource position includes one or more of: the physical resource position of a target data modulation symbol in the group, and the physical resource position of the DMRS corresponding to the group, where the target data modulation symbol includes a pre-designated data modulation symbol in the group.

In an example, sa spacing between the physical resource position of each data modulation symbol in the group and the reference resource position of the group is smaller than a preset spacing, and the preset spacing includes a first frequency domain spacing and/or a first time domain spacing.

In an example, classifying the mapped data modulation symbols into the one or more groups includes:
skipping a data modulation symbol at a first target resource position, and group the data modulation symbols, where the first target resource position is determined as follows:
determining the first target resource position based on a physical resource position for sending a preamble signal; or determining the first target resource position based on a second frequency domain spacing, a second time domain spacing, and the physical resource position for sending the preamble signal.

In an example, the apparatus further includes:
a first determining unit, configured to determine a reserved physical resource position of the DMRS in the group based on the reference resource position of the group and the preset spacing; and
an inserting unit, configured to insert the DMRS onto the reserved physical resource position in the group.

In an embodiment, the apparatus further includes:
a mapping unit, configured to map the DMRS onto the physical resources; and
a second determining unit, configured to take the physical resource position of the DMRS as the reference resource position of the group corresponding to the DMRS.

In an embodiment, the apparatus further includes:
a moving unit, which is configured to, for any group, maintain the physical resource position of a data modulation symbol at the reference resource position in the group unchanged, and move other data modulation symbols in the group to the physical resource positions of the data modulation symbols; or maintain the physical resource position of the DMRS at the reference resource position in the group unchanged, and move other data modulation symbols in the group to the physical resource positions of the data modulation symbols.

In an exemplary embodiment, as shown in FIG. 10, there is provided a data transmission apparatus, including a receiving unit 1002, a determining unit 1004 and a processing unit 1006;
the receiving unit 1002 is configured to receive data modulation symbols and a demodulation reference signal (DMRS) sent by a terminal;
a determining unit 1004 is configured to determine a data modulation symbol in each group according to a reference resource position of the group, where a physical resource position of the DMRS corresponding to the group has an association with the reference resource position; and
a processing unit 1006 is configured to perform channel estimation on the data modulation symbol in each group based on the DMRS corresponding to the group to obtain a DMRS channel estimation result.

In an example, the association between the physical resource position of the DMRS and the reference resource position includes one or more of:
the reference resource position being identical to the physical resource position of the DMRS; and a spacing between the physical resource position of the DMRS and the reference resource position being smaller than a preset spacing.

The reference resource position includes one or more of:
the physical resource position of a target data modulation symbol in the group, and the physical resource position of the DMRS corresponding to the group, where the target data modulation symbol includes a pre-designated data modulation symbol in the group.

In an example, a spacing between the physical resource position of each data modulation symbol in the group and the reference resource position of the group is smaller than a preset spacing, and the preset spacing includes a first frequency domain spacing and/or a first time domain spacing.

It should be noted that the division of the units in the embodiment of the present disclosure is schematic, and is only logical function division, and there may be another division manner in actual implementation. In addition, functional units in the embodiments of the present disclosure may be integrated into one processing unit, or each of the units may exist alone physically, or two or more units are integrated into one unit. The integrated unit can be realized in the form of hardware or a software functional unit.

When implemented in the form of software functional units and sold or used as independent products, the integrated units can be stored in a processor-readable storage medium. Based on such an understanding, the technical solutions of the present disclosure essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor to perform all or a part of steps of the method described in the embodiment of the present disclosure.

It should be noted herein that the apparatus according to the embodiment of the present disclosure can implement all the method steps implemented in the method embodiment, and can achieve the same technical effects, and the same parts and beneficial effects of this embodiment as those of the method embodiment are not repeated herein.

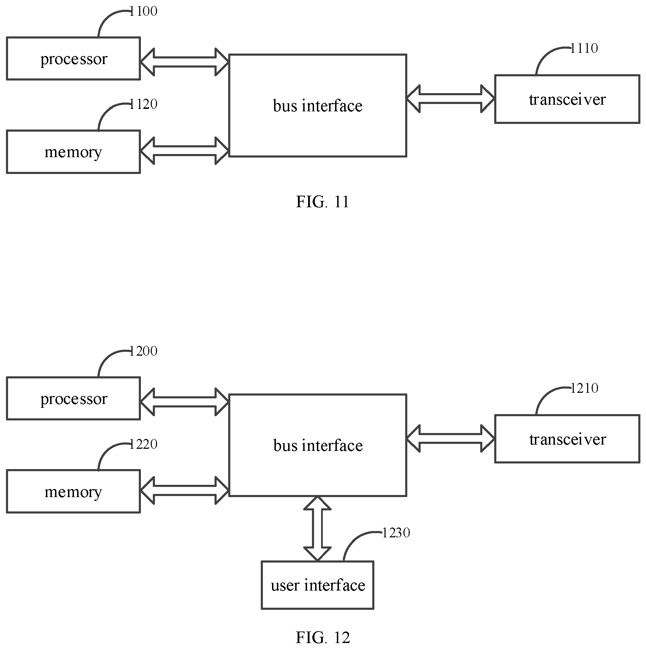

In an exemplary embodiment, as shown in FIG. 11, the present disclosure provides a network device, including a memory, a transceiver and a processor:
the memory is configured to store a computer program; the transceiver is configured to transceive data under control of the processor; and the processor is configured to read the computer program in the memory and perform:
receiving data modulation symbols and a demodulation reference signal (DMRS) sent by a terminal;
determining a data modulation symbol in each group according to a reference resource position of the group, where a physical resource position of the DMRS corresponding to the group has an association with the reference resource position; and
performing channel estimation on the data modulation symbol in each group based on the DMRS corresponding to the group to obtain a DMRS channel estimation result.

In an embodiment, the association between the physical resource position of the DMRS and the reference resource position includes one or more of: the reference resource position being identical to the physical resource position of the DMRS; and a spacing between the physical resource position of the DMRS and the reference resource position being smaller than a preset spacing.

In an embodiment, the reference resource position includes one or more of: the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing.

The transceiver is configured to receive and send data under control of the processor. In FIG. 11, a bus architecture may include any number of interconnected buses and bridges, which specifically link various circuits of one or more processors represented by the processor and memories represented by the memory together. The bus architecture may also link together various other circuits such as peripherals, voltage regulators, and power management circuits, which are well known in the art, and therefore, will not be further described herein. A bus interface provides an interface. The transceiver may be a number of elements, that is, include a transmitter and a receiver, and provide a unit for communication with various other apparatuses over transmission media including wireless channels, wired channels, fiber optic cables, or the like. The processor is responsible for managing the bus architecture and general processing, and the memory may store data used when the processor performs operations.

The processor may be a central processing unit (CPU), an application specific integrated circuit (ASIC), a field-programmable gate array (FPGA), or a complex programmable logic device (CPLD), and may also adopt a multi-core architecture.

It should be noted herein that the apparatus according to the embodiment of the present invention can implement all the method steps implemented in the method embodiment, and can achieve the same technical effects, and the same parts and beneficial effects of this embodiment as those of the method embodiment are not repeated herein.

In an exemplary embodiment, as shown in FIG. 12, the present disclosure provides a terminal, including a memory, a transceiver and a processor:
the memory is configured to store a computer program; the transceiver is configured to transceive data under control of the processor; and the processor is configured to read the computer program in the memory and perform:
sending data modulation symbols and a demodulation reference signal (DMRS) based on physical resource positions of the data modulation symbols and a physical resource position of the DMRS on physical resources;
where he physical resource positions of the data modulation symbols on the physical resources are determined by means of:
mapping the data modulation symbols onto the physical resources, and classifying the mapped data modulation symbols into one or more groups, each group including at least one data modulation symbol; and
for any group, determining the physical resource position of each data modulation symbol in the group based on a reference resource position of the group, the reference resource position having an association with the physical resource position of the DMRS.

In an embodiment, the association between the reference resource position and the physical resource position of the DMRS includes one or more of: the reference resource position being identical to the physical resource position of the DMRS; and a spacing between the physical resource position of the DMRS and the reference resource position being smaller than a preset spacing.

In an embodiment, the reference resource position includes one or more of: the physical resource position of a target data modulation symbol in the group, and the physical resource position of the DMRS corresponding to the group, where the target data modulation symbol includes a pre-designated data modulation symbol in the group.

In an embodiment, a spacing between the physical resource position of each data modulation symbol in the group and the reference resource position of the group is smaller than a preset spacing, and the preset spacing includes a first frequency domain spacing and/or a first time domain spacing.

In an embodiment, classifying the mapped data modulation symbols into the one or more groups includes: skipping a data modulation symbol at a first target resource position, and grouping the data modulation symbols, where the first target resource position is determined as follows: determining the first target resource position based on a physical resource position for sending a preamble signal; or determining the first target resource position based on a second frequency domain spacing, a second time domain spacing, and the physical resource position for sending the preamble signal.

In an embodiment, the method further includes: determining a reserved physical resource position of the DMRS in the group based on the reference resource position of the group and the preset spacing; and inserting the DMRS onto the reserved physical resource position in the group.

In an embodiment, the method further includes: mapping the DMRS onto the physical resources; and taking the physical resource position of the DMRS as the reference resource position of the group corresponding to the DMRS.

In an embodiment, the method further includes: for any group, maintaining the physical resource position of a data modulation symbol at the reference resource position in the group unchanged, and moving other data modulation symbols in the group to the physical resource positions of the data modulation symbols; or maintaining the physical resource position of the DMRS at the reference resource position in the group unchanged, and moving other data modulation symbols in the group to the physical resource positions of the data modulation symbols.

The transceiver is configured to receive and send data under control of the processor. In FIG. 12, a bus architecture may include any number of interconnected buses and bridges, which specifically link various circuits of one or more processors represented by the processor and memories represented by the memory together. The bus architecture may also link together various other circuits such as peripherals, voltage regulators, and power management circuits, which are well known in the art, and therefore, will not be further described herein. A bus interface provides an interface. The transceiver may be a number of elements, that is, include a transmitter and a receiver, and provide a unit for communication with various other apparatuses over transmission media including wireless channels, wired channels, fiber optic cables, or the like. For different user equipment, a user interface may be an interface capable of externally or internally connecting required devices, and the connected devices include, but are not limited to, a keypad, a display, a loudspeaker, a microphone, a joystick, or the like.

The processor is responsible for managing the bus architecture and general processing, and the memory may store data used when the processor 1200 performs operations.

Optionally, the processor may be a central processing unit (CPU), an application specific integrated circuit (ASIC), a field-programmable gate array (FPGA), or a complex programmable logic device (CPLD), and may also adopt a multi-core architecture.

The processor is configured to execute any method according to the embodiment of the present disclosure according to obtained executable instructions by calling the program stored in the memory. The processor and the memory may be physically arranged separately.

It should be noted herein that the apparatus according to the embodiment of the present invention can implement all the method steps implemented in the method embodiment, and can achieve the same technical effects, and the same parts and beneficial effects of this embodiment as those of the method embodiment are not repeated herein.

The present disclosure further provides a processor-readable storage medium storing a program for causing a processor to perform any one of the above data transmission methods.

The processor-readable storage medium may be any available medium or data storage device that can be accessed by a processor, including but not limited to a magnetic memory (e.g., a floppy disk, a hard disk, magnetic tape, a magneto-optical disk (MO), etc.), an optical memory (e.g., a CD, a DVD, a BD, an HVD, etc.), and a semiconductor memory (e.g., an ROM, an EPROM, an EEPROM, a non-transitory memory (NAND FLASH), and a solid state disk (SSDs)), etc.

Those skilled in the art may understand that the present disclosure may be embodied by a method, a system or a computer program product. Therefore, the present invention may be embodied completely by hardware, software or by a combination of software and hardware. In addition, the present invention may be embodied by a computer program product implemented in one or more computer available storage media including computer available program codes (including but not limited to a disk memory, an optical memory, etc.).

The present disclosure is described in conjunction with the flow chart and/or block diagram of the method, device (system) and computer program product according to the embodiments of the present disclosure. It should be understood that each flow and/or block of the flow chart and/or block diagram or a combination of each flow and/or block of the flow chart and/or block diagram may be implemented by the computer executable instructions. These computer executable instructions may be provided to a general purpose computer, a dedicated computer, an embedded processor or the processors of other programmable data processing devices to make a machine, so as to make the instructions performed by the processor of the computer or other programmable data processing devices produce an apparatus for implementing the functions prescribed in one or more flows in the flow chart and/or one or more blocks in the block diagram.

These processor executable instructions may further be stored in a processor readable memory capable of leading the computer or other programmable data processing devices to work in a specific manner, so that the instructions stored in the processor readable memory may produce an article of manufacture including an instruction apparatus, where the instruction apparatus implements the functions prescribed in one or more flows in the flow chart and/or one or more blocks in the block diagram.

It should be noted that user information (including but not limited to user device information, user personal information, or the like) and data (including but not limited to data for analysis, stored data, displayed data, or the like) involved in the present disclosure are information and data authorized by the user or sufficiently authorized by each party, and collection, use and processing of relevant data require compliance with relevant regulations.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, databases or other media used in the embodiments of the present disclosure can include one or more of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, or the like. The transitory memory can include a random access memory (RAM), an external cache memory, or the like. By way of illustration and not limitation, the RAM can take many forms such as a static random access memory (SRAM) and a dynamic random access memory (DRAM). The databases involved in the embodiments of the present disclosure may include one or more of relational and non-relational databases. The non-relational database may include, but is not limited to, a block chain-based distributed database, or the like. The processors referred to in the embodiments of the present disclosure may include, but are not limited to, general processors, central processors, graphics processors, digital signal processors, programmable logic units, data processing logic units based on quantum calculations, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the protection scope of the present disclosure should be subject to the appended claims.

## Claims

1. A data transmission method, applied to a terminal, **characterized by** comprising:
sending data modulation symbols and a demodulation reference signal, DMRS, based on physical resource positions of the data modulation symbols and a physical resource position of the DMRS on physical resources;
wherein the physical resource positions of the data modulation symbols on the physical resources are determined by means of:
mapping the data modulation symbols onto the physical resources, and classifying the mapped data modulation symbols into one or more groups, each group comprising at least one data modulation symbol; and
for any group, determining the physical resource position of each data modulation symbol in the group based on a reference resource position of the group, the reference resource position having an association with the physical resource position of the DMRS.

2. The data transmission method according to claim 1, wherein the association between the reference resource position and the physical resource position of the DMRS comprises one or more of:
the reference resource position being identical to the physical resource position of the DMRS; and
a spacing between the physical resource position of the DMRS and the reference resource position being smaller than a preset spacing.

3. The data transmission method according to claim 1 or 2, wherein the reference resource position comprises one or more of:
the physical resource position of a target data modulation symbol in the group, and the physical resource position of the DMRS corresponding to the group, wherein the target data modulation symbol comprises a pre-designated data modulation symbol in the group.

4. The data transmission method according to claim 1 or 2, wherein a spacing between the physical resource position of each data modulation symbol in the group and the reference resource position of the group is smaller than a preset spacing, and the preset spacing comprises a first frequency domain spacing and/or a first time domain spacing.

5. The data transmission method according to claim 1, wherein classifying the mapped data modulation symbols into the one or more groups comprises:
skipping a data modulation symbol at a first target resource position, and grouping the data modulation symbols;
wherein the first target resource position is determined as follows:
determining the first target resource position based on a physical resource position for sending a preamble signal; or
determining the first target resource position based on a second frequency domain spacing, a second time domain spacing, and the physical resource position for sending the preamble signal.

6. The data transmission method according to claim 2, further comprising:
determining a reserved physical resource position of the DMRS in the group based on the reference resource position of the group and the preset spacing; and
inserting the DMRS onto the reserved physical resource position in the group.

7. The data transmission method according to claim 2, further comprising:
mapping the DMRS onto the physical resources; and
taking the physical resource position of the DMRS as the reference resource position of the group corresponding to the DMRS.

8. The data transmission method according to claim 1, further comprising:
for any group, maintaining the physical resource position of a data modulation symbol at the reference resource position in the group unchanged, and moving other data modulation symbols in the group to the physical resource positions of the data modulation symbols; or
maintaining the physical resource position of the DMRS at the reference resource position in the group unchanged, and moving other data modulation symbols in the group to the physical resource positions of the data modulation symbols.

9. A data transmission method, applied to a network device, **characterized by** comprising:
receiving data modulation symbols and a demodulation reference signal, DMRS, sent by a terminal;
determining a data modulation symbol in each group according to a reference resource position of the group, wherein a physical resource position of the DMRS corresponding to the group has an association with the reference resource position; and
performing channel estimation on the data modulation symbol in each group based on the DMRS corresponding to the group to obtain a DMRS channel estimation result.

10. The data transmission method according to claim 9, wherein the association between the physical resource position of the DMRS and the reference resource position comprises one or more of:
the reference resource position being identical to the physical resource position of the DMRS; and
a spacing between the physical resource position of the DMRS and the reference resource position being smaller than a preset spacing.

11. The data transmission method according to claim 9 or 10, wherein the reference resource position comprises one or more of:
the physical resource position of a target data modulation symbol in the group, and the physical resource position of the DMRS corresponding to the group, wherein the target data modulation symbol comprises a pre-designated data modulation symbol in the group.

12. The data transmission method according to claim 9 or 10, wherein a spacing between the physical resource position of each data modulation symbol in the group and the reference resource position of the group is smaller than a preset spacing, and the preset spacing comprises a first frequency domain spacing and/or a first time domain spacing.

13. A data transmission apparatus, **characterized by** comprising:
a sending unit, configured to send data modulation symbols and a demodulation reference signal, DMRS, based on physical resource positions of the data modulation symbols and a physical resource position of the DMRS on physical resources;
wherein the physical resource positions of the data modulation symbols on the physical resources are determined by a processing unit, and the processing unit is configured to:
map the data modulation symbols onto the physical resources, and classify the mapped data modulation symbols into one or more groups, each group comprising at least one data modulation symbol; and
for any group, determine the physical resource position of each data modulation symbol in the group based on a reference resource position of the group, the reference resource position having an association with the physical resource position of the DMRS.

14. The data transmission apparatus according to claim 13, wherein the association relationships between the reference resource position and the physical resource position of the DMRS comprises one or more of:
the reference resource position being identical to the physical resource position of the DMRS; and
a spacing between the physical resource position of the DMRS and the reference resource position being smaller than a preset spacing.

15. The data transmission apparatus according to claim 13 or 14, wherein the reference resource position comprises one or more of:
the physical resource position of a target data modulation symbol in the group, and the physical resource position of the DMRS corresponding to the group, wherein the target data modulation symbol comprises a pre-designated data modulation symbol in the group.

16. The data transmission apparatus according to claim 13 or 14, wherein a spacing between the physical resource position of each data modulation symbol in the group and the reference resource position of the group is smaller than a preset spacing, and the preset spacing comprises a first frequency domain spacing and/or a first time domain spacing.

17. The data transmission apparatus according to claim 13, wherein the processing unit is configured to:
skip a data modulation symbol at a first target resource position, and group the data modulation symbols;
wherein the first target resource position is determined as follows:
determining the first target resource position based on a physical resource position for sending a preamble signal; or
determining the first target resource position based on a second frequency domain spacing, a second time domain spacing, and the physical resource position for sending the preamble signal.

18. The data transmission apparatus according to claim 14, further comprising:
a first determining unit, configured to determine a reserved physical resource position of the DMRS in the group based on the reference resource position of the group and the preset spacing; and
an inserting unit, configured to insert the DMRS onto the reserved physical resource position in the group.

19. The data transmission apparatus according to claim 14, further comprising:
a mapping unit, configured to map the DMRS onto the physical resources; and
a second determining unit, configured to take the physical resource position of the DMRS as the reference resource position of the group corresponding to the DMRS.

20. The data transmission apparatus according to claim 13, further comprising:
a moving unit, which is configured to, for any group,
maintain the physical resource position of a data modulation symbol at the reference resource position in the group unchanged, and move other data modulation symbols in the group to the physical resource positions of the data modulation symbols; or
maintain the physical resource position of the DMRS at the reference resource position in the group unchanged, and move other data modulation symbols in the group to the physical resource positions of the data modulation symbols.

21. A data transmission apparatus, **characterized by** comprising:
a receiving unit, configured to receive data modulation symbols and a demodulation reference signal, DMRS, sent by a terminal;
a determining unit, configured to determine a data modulation symbol in each group according to a reference resource position of the group, wherein a physical resource position of the DMRS corresponding to the group has an association with the reference resource position; and
a processing unit, configured to perform channel estimation on the data modulation symbol in each group based on the DMRS corresponding to the group to obtain a DMRS channel estimation result.

22. The data transmission apparatus according to claim 21, wherein the association between the physical resource position of the DMRS and the reference resource position comprises one or more of:
the reference resource position being identical to the physical resource position of the DMRS; and
a spacing between the physical resource position of the DMRS and the reference resource position being smaller than a preset spacing.

23. The data transmission apparatus according to claim 21 or 22, wherein the reference resource position comprises one or more of:
the physical resource position of a target data modulation symbol in the group, and the physical resource position of the DMRS corresponding to the group, wherein the target data modulation symbol comprises a pre-designated data modulation symbol in the group.

24. The data transmission apparatus according to claim 21 or 22, wherein a spacing between the physical resource position of each data modulation symbol in the group and the reference resource position of the group is smaller than a preset spacing, and the preset spacing comprises a first frequency domain spacing and/or a first time domain spacing.

25. A terminal, comprising a memory, a transceiver and a processor, **characterized in that**:
the memory is configured to store a computer program; the transceiver is configured to transceive data under control of the processor; and the processor is configured to read the computer program in the memory and perform:
sending data modulation symbols and a demodulation reference signal, DMRS, based on physical resource positions of the data modulation symbols and a physical resource position of the DMRS on physical resources;
wherein the physical resource positions of the data modulation symbols on the physical resources are determined by means of:
mapping the data modulation symbols onto the physical resources, and classifying the mapped data modulation symbols into one or more groups, each group comprising at least one data modulation symbol; and
for any group, determining the physical resource position of each data modulation symbol in the group based on a reference resource position of the group, the reference resource position having an association with the physical resource position of the DMRS.

26. The terminal according to claim 25, wherein the association between the reference resource position and the physical resource position of the DMRS comprises one or more of:
the reference resource position being identical to the physical resource position of the DMRS; and
a spacing between the physical resource position of the DMRS and the reference resource position being smaller than a preset spacing.

27. The terminal according to claim 25 or 26, wherein the reference resource position comprises one or more of:
the physical resource position of a target data modulation symbol in the group, and the physical resource position of the DMRS corresponding to the group, wherein the target data modulation symbol comprises a pre-designated data modulation symbol in the group.

28. The terminal according to claim 25 or 26, wherein a spacing between the physical resource position of each data modulation symbol in the group and the reference resource position of the group is smaller than a preset spacing, and the preset spacing comprises a first frequency domain spacing and/or a first time domain spacing.

29. The terminal according to claim 25, wherein the processor is further configured to perform:
skipping a data modulation symbol at a first target resource position, and grouping the data modulation symbols;
wherein the first target resource position is determined as follows:
determining the first target resource position based on a physical resource position for sending a preamble signal; or
determining the first target resource position based on a second frequency domain spacing, a second time domain spacing, and the physical resource position for sending the preamble signal.

30. The terminal according to claim 26, wherein the processor is further configured to perform:
determining a reserved physical resource position of the DMRS in the group based on the reference resource position of the group and the preset spacing; and
inserting the DMRS onto the reserved physical resource position in the group.

31. The terminal according to claim 26, wherein the processor is further configured to perform:
mapping the DMRS onto the physical resources; and
taking the physical resource position of the DMRS as the reference resource position of the group corresponding to the DMRS.

32. The terminal according to claim 25, wherein the processor is further configured to perform:
for any group, maintaining the physical resource position of a data modulation symbol at the reference resource position in the group unchanged, and moving other data modulation symbols in the group to the physical resource positions of the data modulation symbols; or
maintaining the physical resource position of the DMRS at the reference resource position in the group unchanged, and moving other data modulation symbols in the group to the physical resource positions of the data modulation symbols.

33. A network device, comprising a memory, a transceiver and a processor, **characterized in that**:
the memory is configured to store a computer program; the transceiver is configured to transceive data under control of the processor; and the processor is configured to read the computer program in the memory and perform:
receiving data modulation symbols and a demodulation reference signal, DMRS, sent by a terminal;
determining a data modulation symbol in each group according to a reference resource position of the group, wherein a physical resource position of the DMRS corresponding to the group has an association with the reference resource position; and
performing channel estimation on the data modulation symbol in each group based on the DMRS corresponding to the group to obtain a DMRS channel estimation result.

34. The network device according to claim 33, wherein the association between the physical resource position of the DMRS and the reference resource position comprises one or more of:
the reference resource position being identical to the physical resource position of the DMRS; and
a spacing between the physical resource position of the DMRS and the reference resource position being smaller than a preset spacing.

35. The network device according to claim 33 or 34, wherein the reference resource position comprises one or more of:
the physical resource position of a target data modulation symbol in the group, and the physical resource position of the DMRS corresponding to the group, wherein the target data modulation symbol comprises a pre-designated data modulation symbol in the group.

36. The network device according to claim 33 or 34, wherein a spacing between the physical resource position of each data modulation symbol in the group and the reference resource position of the group is smaller than a preset spacing, and the preset spacing comprises a first frequency domain spacing and/or a first time domain spacing.

37. A processor-readable storage medium, storing a program thereon, **characterized in that** the program is configured to cause a processor to perform the data transmission method according to any one of claims 1 to 8.

38. A processor-readable storage medium, storing a program thereon, **characterized in that** the program is configured to cause a processor to perform the data transmission method according to any one of claims 9 to 12.
